(19) Europäisches Patentamt
European Patent Office
Office européen des brevets

(11) EP 4 406 827 A1

(12) # EUROPEAN PATENT APPLICATION
published in accordance with Art. 153(4) EPC

(43) Date of publication:
**31.07.2024 Bulletin 2024/31**

(21) Application number: **22872929.9**

(22) Date of filing: **21.09.2022**

(51) International Patent Classification (IPC):
***B63H 25/42*** *(2006.01)*

(52) Cooperative Patent Classification (CPC):
**B63H 25/42**

(86) International application number:
**PCT/JP2022/035152**

(87) International publication number:
**WO 2023/048177 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.09.2021 JP 2021154505**

(71) Applicant: **IHI Power Systems Co., Ltd.**
**Chiyoda-ku**
**Tokyo 101-0021 (JP)**

(72) Inventor: **SATO, Hidetaka**
**Tokyo 101-0021 (JP)**

(74) Representative: **Winter, Brandl - Partnerschaft mbB**
**Alois-Steinecker-Straße 22**
**85354 Freising (DE)**

(54) **SHIP MANEUVERING SYSTEM**

(57) [Problem]

To control the translational movement of a hull with a simple operation performed by operating a pair of azimuth thrusters (thrusters) with a single maneuvering device.

[Solution]

In a translational movement mode of the ship maneuvering system comprising a pair of thrusters 10, 10 provided symmetrically with respect to the center line of a hull 7, a maneuvering device 9 that outputs a first maneuvering quantity $\eta$ instructing the direction of travel of the hull 7 and a second maneuvering quantity H instructing a change in the speed of the ship, and a control device 8, a target thrust of the hull is determined according to the first maneuvering quantity and the second maneuvering quantity, and a combination of thruster orientations $\alpha$, $\beta$ and thruster thrusts Tl, Tr of the pair of thrusters that produces the target thrust is calculated and selected.

FIG. 9

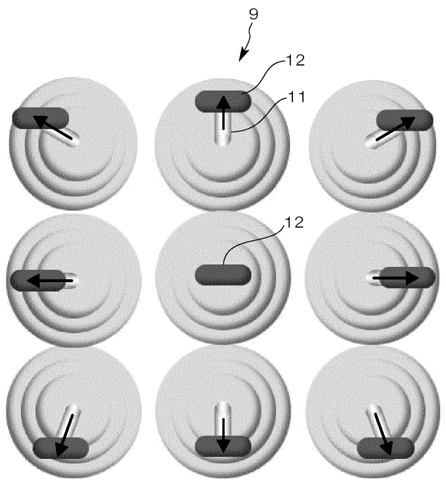




Processed by Luminess, 75001 PARIS (FR)

## Description

### Technical Field

The present invention relates to a ship maneuvering system for controlling, by operation of a maneuvering device, a pair of azimuth thrusters provided at a hull, and in particular relates to a ship maneuvering system provided with a translational movement mode for controlling a pair of azimuth thrusters so that the hull moves translationally.

In the present application, an azimuth thruster (hereinunder also referred to as "thruster") is a propulsion device of a ship utilizing a propeller driven by an output shaft of an engine or electrically driven motor, and is provided with a mechanism of which a propeller can be turned in all directions at 360° about a vertical axis which is perpendicular to the propeller shaft, and of which a driving force by the propeller can be set up to be orientated towards any of these directions.

### Background Art

Patent Literature 1 discloses an invention for a marine vessel propulsion control device whose objective was configured to achieve a hull behavior desired by a user, by enabling navigation patterns to be easily changed. A marine vessel propulsion control device 5 according to this invention has a control unit 10 and an input device 11. The control unit 10 comprises a memory portion for storing a plurality of navigation patterns set up corresponding to a plurality of combinations of three propulsion devices 3A, 3B, 3C and three operation devices 4A, 4B, 4C. Based on selection information from this plurality of navigation patterns, one navigation pattern is specified and is read out from the memory portion, and a command signal is outputted to the propulsion devices 3A, 3B, 3C according to operation signals of the operation devices 4A, 4B, 4C based on the read-out navigation pattern.

Patent Literature 2 discloses an invention of a maneuvering system which maneuvers, by means of operation of a joystick and a dial, a vessel provided with two propulsion systems on a stern: a port side propulsion system consisting of a port side propulsion device and a port side rudder; and a starboard side propulsion system consisting of a starboard side propulsion device and a starboard side rudder. According to this invention, the forward moving force or backward moving force of the vessel is obtained by differences in propulsion force of the front and back directions of the propulsion systems of the port side propulsion device and starboard side propulsion device. Moreover, a first turning moment of the vessel produced by these propulsion forces is cancelled out by a second turning moment of the vessel produced by steering the rudder of one broadside of the propulsion system. Thereby, control can be performed to translate the vessel toward the other side of the broadside whilst avoiding rotation of the vessel. According to this invention, high-level maneuverability can be exhibited in the operation of a vessel.

Patent Literature 3 discloses an invention of a maneuvering device of a ship for controlling a pair of azimuth thrusters. The maneuvering device according to this invention comprises: a pair of left-right forward-reverse moving handlebars 6, 7; a turning handlebar 1; and a pair of knobs 31, 32 for motor control provided at the pair of forward-reverse moving handlebars 6, 7. Operating this maneuvering device enables precise and quick navigation by combining the operation of turning a boat, the operation of forward-reverse movement of a boat, and the operation of individually controlling the propulsion force of a pair of azimuth thrusters.

### Citation List

#### Patent Literature

Patent Literature 1: JP 2014-034269 A
Patent Literature 2: JP 2018-086988 A
Patent Literature 3: JP H02-49200 Y2

### Summary of Invention

#### Technical Problem

A working boat such as a tugboat is generally provided with a plurality of propulsion devices, and by individually controlling the action of each propulsion device, the hull can be made to move arbitrarily. The inventions disclosed in aforementioned Patent Literature 1 to 3 control the movement of the hull by controlling a plurality of propulsion devices. However, as explained below, all these inventions have a closely similar problem in that if there are a large number of propulsion devices and maneuvering devices to be controlled, the number of combinations of actions of propulsion devices for achieving one hull behavior becomes large, and thus maneuvering of boats becomes complicated.

The invention disclosed in Patent Literature 1 is configured to facilitate the maneuvering by selecting any navigation pattern; however, this requires the troublesome work of preparing a plurality of navigation patterns beforehand, and also requires sufficient understanding of the content of the plurality of navigation patterns before starting maneuvering. Namely, there are problems in that the system is complicated, and that it is not necessarily easy to select optimal navigation patterns from amongst a plurality of navigation patterns during actual navigation.

The invention disclosed in Patent Literature 2 is configured such that the action of a pair of propulsion devices and a rudder is controlled by operation of a joystick and a dial, and high-level maneuverability can be exhibited by simple maneuvering. However, this requires a two-system operation of a maneuvering device in that the direction of travel is operated by a joystick, and turning (swing or orientation change) is operated by a dial, which cannot necessarily be said to be simple maneuvering. There is moreover a problem in that the actions of the propulsion devices and rudder need to be set up in the maneuvering control device for each hull action.

There is a problem in the invention disclosed in Patent Literature 3 in that handlebar operation of the pair of left-right and forward-reverse moving handlebars, as well as the turning handlebars is required in order to operate a pair of azimuth thrusters, and hence maneuvering is complicated.

The objective of the present invention is to solve the aforementioned problem in the conventional technology and to provide a ship maneuvering system which can control the translational movement of a hull with a simple operation, by controlling a pair of azimuth thrusters provided at the hull by one maneuvering device, and by switching navigation modes.

Solution to Problem

The ship maneuvering system described in Claim 1 is provided with:

a pair of azimuth thrusters provided at a hull so as to be left-right symmetrical with respect to a center line of the hull;
a maneuvering device for outputting a first maneuvering quantity instructing a direction of travel of a hull and a second maneuvering quantity instructing a propulsion force of a hull; and
a control device to control the azimuth thrusters by operation of the maneuvering device, where
the control device is provided with a translational movement mode for controlling the azimuth thrusters so that a hull moves translationally,
the control device determines a target thrust of a hull according to the first maneuvering quantity and the second maneuvering quantity of the maneuvering device in the translational movement mode, and
calculates and selects a combination of thruster orientation $\alpha$ and thruster orientation $\beta$ of the pair of azimuth thrusters, and thruster thrust Tl and thruster thrust Tr of the pair of azimuth thrusters corresponding to the thruster orientation $\alpha$ and the thruster orientation $\beta$ so that the target thrust is obtained.

The ship maneuvering system described in Claim 2, where

the control device in the ship maneuvering system described in Claim 1, in the translational movement mode, calculates a combination of the thruster orientation $\alpha$ of the azimuth thruster at a hull's port and the thruster orientation $\beta$ of the azimuth thruster at a hull's starboard, by means of:

a traversing component Fx and forward-reverse moving component Fy of the target thrust;
an angle $\theta$, from a straight line connecting the center of gravity of a hull with a turning center of a thruster of the azimuth thrusters, to a center line of the hull; and

$$Fx \cos\alpha - Fx \cos(\alpha - \theta) / (\tan\beta \cos\theta + \sin\theta) = Fy \sin\alpha - Fy \sin(\alpha - \theta) / (\cos\theta + \sin\theta / \tan\beta). \quad \text{(Relation Formula 1)}$$

The ship maneuvering system described in Claim 3, where

the control device in the ship maneuvering system according to any one of Claims 1 or 2, in the translational movement mode,
selects, from amongst a combination of the thruster orientation $\alpha$ of the azimuth thruster at a hull's port and the thruster orientation $\beta$ of the azimuth thruster at a hull's starboard, a combination of:
a value of thruster orientation difference $|\alpha 2 - \alpha 1|$, which is a difference of present value $\alpha 1$ of the thruster orientation when operating the maneuvering device, and the thruster orientation α2 after operating the maneuvering device; and a value of thruster orientation difference |β2 - β1|, which is a difference of present value β1 of the thruster orientation when operating the maneuvering device, and the thruster orientation β2 after operating the maneuvering device, such that any of the larger one becomes a minimum.

The ship maneuvering system described in Claim 4, where

the control device in the ship maneuvering system according to any one of Claims 1 or 2, in the translational movement mode,
selects, from amongst a combination of the thruster orientation α of the azimuth thruster at a hull's port and the thruster orientation β of the azimuth thruster at a hull's starboard, a combination of:

a value of thruster orientation difference |α2 - α1|, which is a difference of present value α1 of the thruster orientation when operating the maneuvering device, and the thruster orientation α2 after operating the maneuvering device;
a value of thruster orientation difference |β2 - β1|, which is a difference of present value β1 of the thruster orientation when operating the maneuvering device, and the thruster orientation β2 after operating the maneuvering device;
a value of thruster thrust difference |Tl2 - Tl1|, which is a difference of present value Tl1 of the thruster thrust when operating the maneuvering device, and the thruster thrust Tl2 after operating the maneuvering device; and
a value of thruster thrust difference |Tr2 - Tr1|, which is a difference of present value Tr1 of the thruster thrust when operating the maneuvering device, and the thruster thrust Tr2 after operating the maneuvering device,
such that a maximum value becomes a minimum.

The ship maneuvering system described in Claim 5, where

the control device in the ship maneuvering system according to any one of Claims 1 or 2, in the translational movement mode,
selects, from amongst a combination of the thruster orientation α of the azimuth thruster at a hull's port and the thruster orientation β of the azimuth thruster at a hull's starboard, a combination of:

an estimated attainment time required for changing from the thruster orientation α1 when operating the maneuvering device to the thruster orientation α2 after operating the maneuvering device;
an estimated attainment time required for changing from the thruster orientation β1 when operating the maneuvering device to the thruster orientation β2 after operating the maneuvering device;
an estimated attainment time required for changing from the thruster thrust Tl1 when operating the maneuvering device to the thruster thrust Tl2 after operating the maneuvering device; and
an estimated attainment time required for changing from the thruster thrust Tr1 when operating the maneuvering device to the thruster thrust Tr2 after operating the maneuvering device,
such that a maximum value becomes a minimum.

The ship maneuvering system described in Claim 6, where

the control device in the ship maneuvering system according to any one of Claims 1 or 2, in the translational movement mode,
selects, from amongst a combination of the thruster orientation α of the azimuth thruster at a hull's port and the thruster orientation β of the azimuth thruster at a hull's starboard, a combination of:
a value of thruster orientation difference |α2 - α1|, which is a difference of present value α1 of the thruster orientation when operating the maneuvering device, and the thruster orientation α2 after operating the maneuvering device; and a value of thruster orientation difference |β2 - β1|, which is a difference of present value β1 of the thruster orientation when operating the maneuvering device, and the thruster orientation β2 after operating the maneuvering device, in a selectable range when considering other elements, excluding the time that the azimuth thrusters require for turning, such that any of the larger one becomes a minimum.

The ship maneuvering system described in Claim 7, where

the control device in the ship maneuvering system according to any one of Claims 1 or 2, in the translational movement mode,

calculates thruster orientation $\alpha0$ and thruster thrust $Tl0$ of the azimuth thruster at a hull's port, and thruster orientation $\beta0$ and thruster thrust $Tr0$ of the azimuth thruster at a hull's starboard, as left-right symmetrical reference values of thruster orientations and thruster thrusts of the pair of azimuth thrusters, by increasing/decreasing a forward-reverse moving component of the thruster orientations and the thruster thrusts according to an increase/decrease of the second maneuvering quantity, by means of control similar to that of the case in which a hull conducts forward movement or reverse movement,
selects, in the translational movement mode, from amongst a combination of the thruster orientation $\alpha$ of the azimuth thruster at a hull's port and the thruster orientation $\beta$ of the azimuth thruster at a hull's starboard, a combination of:

a value of thruster orientation difference $|\alpha2 - \alpha0|$, which is a difference of the thruster orientation $\alpha0$ and the thruster orientation $\alpha2$ after operating the maneuvering device; a value of thruster orientation difference $|\beta2 - \beta0|$, which is
a difference of the thruster orientation $\beta0$ and the thruster orientation $\beta2$ after operating the maneuvering device;
a value of thruster thrust difference $|Tl2 - Tl0|$, which is a difference of the thruster thrust $Tl0$ and the thruster thrust $Tl2$ after operating the maneuvering device; and a value of thruster thrust difference $|Tr2 - Tr0|$, which is a difference of the thruster thrust $Tr0$ and the thruster thrust $Tr2$ after operating the maneuvering device,
such that a maximum value becomes a minimum.

The ship maneuvering system described in Claim 8, where

the control device in the ship maneuvering system according to any one of Claims 1 or 2, in the translational movement mode,
rectifies the size of the target thrust according to a value of the first maneuvering quantity, and
calculates and selects a combination of thruster orientation $\alpha$ and thruster orientation $\beta$ of the pair of azimuth thrusters, and thruster thrust $Tl$ and thruster thrust $Tr$ of the pair of azimuth thrusters corresponding to the thruster orientation $\alpha$ and the thruster orientation $\beta$, such that the rectified target thrust is obtained.

The ship maneuvering system described in Claim 9, where

the control device in the ship maneuvering system described in Claims 1 or 2, in the translational movement mode, selects another combination of which the total of the thruster thrust $Tl$ and the thruster thrust $Tr$ becomes smaller from amongst combinations of the thruster orientation $\alpha$, the thruster orientation $\beta$, the thruster thrust $Tl$, and the thruster thrust $Tr$ producing the target thrust,
if a state in which the same first maneuvering quantity and the second maneuvering quantity which were outputted from the maneuvering device exceeded a prescribed period of time, and
changes to the another combination from the present combination.

The ship maneuvering system described in Claim 10, where

the maneuvering device in the ship maneuvering system described in Claims 1 or 2 can output a third maneuvering quantity instructing a swing of a hull or a change in hull orientation, and
the control device, in the translational movement mode,
changes at least one of the thruster orientations and the thruster thrusts of the pair of azimuth thrusters, by means of the third maneuvering quantity outputted from the maneuvering device.

The ship maneuvering system described in Claim 11, where

the control device in the ship maneuvering system according to Claim 10, in the translational movement mode,
calculates a combination of the thruster orientation $\alpha$ of the azimuth thruster at a hull's port and the thruster orientation $\beta$ of the azimuth thruster at a hull's starboard, by means of:

traversing component $Fx$ and forward-reverse moving component $Fy$ of the target thrust;
an angle $\theta$, from a straight line connecting the center of gravity of a hull with a turning center of a thruster of the azimuth thrusters, to a center line of the hull;
a target swing component $M$ of a hull determined according to the third maneuvering quantity outputted from the maneuvering device; and

$$\{-Fy (\tan\beta \cos\theta + \sin\theta) + M\} / \{\sin(\alpha - \theta) - \cos\alpha (\tan\beta \cos\theta + \sin\theta)\} = \{-Fx (\cos\theta + \sin\theta / \tan\beta) + M\} / \{\sin(\alpha - \theta) - \sin\alpha (\cos\theta + \sin\theta / \tan\beta)\}. \quad \text{(Relation Formula 2)}$$

The ship maneuvering system described in Claim 12, where

the control device in the ship maneuvering system according to Claim 10, in the translational movement mode, calculates a combination of the thruster orientation $\alpha$ of the azimuth thruster at a hull's port and the thruster orientation $\beta$ of the azimuth thruster at a hull's starboard, by means of:

traversing component Fx' and forward-reverse moving component Fy' of a target thrust of which a target thrust of a hull was reduced, and which was determined according to the first maneuvering quantity and the second maneuvering quantity;
an angle $\theta$, from a straight line connecting the center of gravity of a hull with a turning center of a thruster of the azimuth thrusters, to a center line of the hull;
a target swing component of a hull determined according to the third maneuvering quantity outputted from the maneuvering device; and

$$\{-Fy (\tan\beta \cos\theta + \sin\theta) + M\} / \{\sin(\alpha - \theta) - \cos\alpha (\tan\beta \cos\theta + \sin\theta)\} = \{-Fx (\cos\theta + \sin\theta / \tan\beta) + M\} / \{\sin(\alpha - \theta) - \sin\alpha (\cos\theta + \sin\theta / \tan\beta)\}. \quad \text{(Relation Formula 2)}$$

The ship maneuvering system described in Claim 13, where

the control device in the ship maneuvering system according to Claim 10, in the translational movement mode, changes the thruster orientations of the pair of azimuth thrusters to an angle of which a swing component becomes larger, and
changes the thruster thrusts of the pair of azimuth thrusters according to the size of a target swing component.

The ship maneuvering system described in Claim 14

is provided with a measuring device measuring a hull orientation, where
the control device, in the translational movement mode,
determines the target swing component such that a difference between a hull orientation measured with the measuring device and a target hull orientation is made to be zero, in the ship maneuvering system according to Claim 10.

The ship maneuvering system described in Claim 15
is provided with a measuring device measuring a hull orientation, where
the control device, in the translational movement mode,
calculates a difference between a hull orientation measured with the measuring device and target hull orientation, and
configures the target swing component as a value obtained by adding a value obtained by multiplying the difference with a coefficient, to a value obtained by time differentiating the difference and multiplying this with a coefficient, in the ship maneuvering system according to Claim 14.

The ship maneuvering system described in Claim 16

is provided with measuring device measuring a hull orientation and a swing angular velocity of a hull, where
the control device, in the translational movement mode,
calculates the difference between a hull orientation measured with the measuring device and target hull orientation, and
configures the target swing component as a value obtained by multiplying, a value obtained by subtracting a swing angular velocity from a value obtained by multiplying the difference with a coefficient, with a coefficient, in the ship maneuvering system described in Claim 14.

The ship maneuvering system described in Claim 17

determines a target swing component of a hull according to the third maneuvering quantity when the third maneuvering quantity was outputted, and
performs the control described in Claim 14 when the third maneuvering quantity is not outputted, in the ship maneuvering system described in Claim 14.

The ship maneuvering system described in Claim 18, where

the control device in the ship maneuvering system described in Claim 14, in the translational movement mode, configures a hull orientation in at least one point in time, of a point of switching to the translational movement mode, or a point in time at which a third maneuvering quantity becomes zero, as a target hull orientation.

The ship maneuvering system described in Claim 19, where

the maneuvering device in the ship maneuvering system according to any one of Claims 1 or 2 is provided with a cruising mode for controlling the azimuth thrusters so that a hull performs a forward movement or reverse movement, where in the cruising mode,
forward-reverse movement, straight advancing turning, reverse turning movement, and neutral stop of a hull takes place by
configuring a reference value of thruster orientations of the pair of azimuth thrusters left-right symmetrical,
increasing/decreasing a forward-reverse moving component of the thruster orientations and the thruster thrusts of the pair of azimuth thrusters according to an increase/decrease of the second maneuvering quantity, and
further increasing/decreasing the thruster orientations set up according to the second maneuvering quantity, according to an increase/decrease of the first maneuvering quantity.

The ship maneuvering system described in Claim 20, where

the maneuvering device in the ship maneuvering system described in Claim 19
can output a third maneuvering quantity instructing a swing of a hull or a change in hull orientation, and
the control device, in the cruising mode,
increases/decreases the thruster orientation set up according to the second maneuvering quantity, according to an increase/decrease of the third maneuvering quantity instead of the first maneuvering quantity, or
further increases/decreases, according to a third maneuvering quantity, the thruster orientation set up according to the second maneuvering quantity, after having increased/decreased the thruster orientation according to the first maneuvering quantity.

The ship maneuvering system described in Claim 21, where
at least one maneuvering quantity of the first maneuvering quantity and the second maneuvering quantity is remotely provided to the control device, in the ship maneuvering system according to any one of Claims 1 or 2.
The ship maneuvering system described in Claim 22
is provided with a receiver of a remote maneuvering device at the hull, and is provided with a transmitter of the remote maneuvering device at a main boat which is moved by the hull, in the maneuvering system described in Claim 21.

Advantageous Effects of Invention

According to the invention of Claim 1, by performing a simple operation, such as with e.g. a joystick, of utilizing a single maneuvering device for outputting at least a first maneuvering quantity instructing the direction of travel of a hull and a second maneuvering quantity instructing the propulsion force of the hull, a ship provided with a pair of azimuth thrusters provided so as to be left-right symmetrical with respect to a center line of the hull can be maneuvered in the translational movement mode with high maneuverability, such as for performing a translational movement of the hull.
As the action of the azimuth thrusters, which are an object for control, there are four types of actions of the thruster orientations and thruster thrusts of a pair of azimuth thrusters provided at a hull, and there exists large number of combinations of the four types of actions which achieve one hull behavior. Thus, the target thrust made to be produced at a hull is determined by a first maneuvering quantity and a second maneuvering quantity outputted according to the operation of a maneuvering device. Then, combinations of the four types of actions of azimuth thrusters producing this target thrust are calculated, and by selecting an appropriate combination from amongst these, the optimal action of the pair of azimuth thrusters can be automatically selected and implemented for each one operation of the maneuvering device. Hence, a working boat such as a tugboat etc., can reliably perform de-berthing and positioning by a simple operation, by translational movement of the hull in the translational movement mode.

According to the invention of Claim 2, if providing a traversing component Fx and forward-reverse moving component Fy of a target thrust, which is determined by: angle θ which is a fixed value determined from the structure and equipment of a boat; as well as a first maneuvering quantity and a second maneuvering quantity outputted by operation of a maneuvering device, because the relationship of the thruster orientation α at port and the thruster orientation β at starboard is expressed in Relational Formula 1, the combination of thruster orientation α and thruster orientation β can be calculated.

According to the invention of Claim 3, when operating the maneuvering device, the combination of four types of actions of azimuth thrusters which produce a target thrust changes from the present state to a state after operation. To the extent to which the difference of the thruster orientations is large due to a change thereof, more time and motive force is required to change the route or speed of the hull. Thus, by selecting a combination of thruster orientations such that the larger of the values of thruster orientation differences $|\alpha 2 - \alpha 1|$ and $|\beta 2 - \beta 1|$ of the present and of after operation of a maneuvering device becomes the minimum, smooth and efficient maneuvering can be performed.

In the selection method of the invention of the aforementioned Claim 3, a judgement is made only from the thruster orientations. However, depending on the operation of a maneuvering device, there are cases where the change of thruster orientations is small but the change of the thruster thrusts becomes large, and hence much time and motive force are required in order to change the route or speed of the hull. According to the invention of Claim 4, not only the thruster orientation differences $|\alpha 2 - \alpha 1|$ and $|\beta 2 - \beta 1|$ of the present and of after operation of a maneuvering device, but also the thruster thrust differences $|Tl2 - Tl1|$ and $|Tr2 - Tr1|$ of the present and of after operation of a maneuvering device are also configured as an object, and by selecting a combination of thruster orientations such that, as a ratio, the largest value from amongst these becomes the minimum, smooth and efficient maneuvering can be performed.

The selection method of the invention of the aforementioned Claim 4 is a method for selecting a combination in which a change of thruster orientations and thruster thrusts is made to be the minimum. However, because the time for attaining the thruster orientations and thruster thrusts after operation depends on the speed increase/decrease capability of the propeller rotation speed or nozzle turning capability, it is not a method for maximally shortening the time required for changes. Thus, in the invention of Claim 5, smooth maneuvering can be performed by selecting a combination of thruster orientations such that the estimated attainment time, from the present state until attaining thruster orientations and thruster thrusts after operation of a maneuvering device; namely until attaining the target, becomes a minimum.

With the selection method of the invention of the aforementioned Claim 3, a combination of thruster orientations is selected such that the thruster orientation difference becomes a minimum; however, even though the change of thruster orientations α or β becomes smaller, if a combination is selected such that, for example, a pair of azimuth thrusters become mutually facing inward (propellers are facing each other in opposition), the azimuth thrusters may fail or the hull may vibrate to impart damage to the hull due to the impact of two water currents. Moreover, efficiency will also worsen due to thrust of the azimuth thrusters cancelling each other out. Furthermore, according to the invention of Claim 6, which includes combinations where thruster thrusts are extremely large and also includes unrealistic or technologically impossible combinations such as thruster thrusts becoming negative (minus) etc., by selecting, from a range limited to realistically selectable combinations, a combination of which a change of thruster orientations α and β becomes smaller, and excluding such cases which should be avoided, smooth maneuvering can be performed without bringing about a disadvantageous situation from the mechanical impact aspect or efficiency aspect.

With the selection method of the invention of the aforementioned Claim 4, a combination of thruster orientations is selected based on the values of the thruster orientation differences $|\alpha 2 - \alpha 1|$ and $|\beta 2 - \beta 1|$ of the present and of after operation of a maneuvering device, and of thruster thrust differences $|Tl2 - Tl1|$ and $|Tr2 - Tr1|$ of the present and of after operation of a maneuvering device. However, as another idea, with the selection method of the invention of Claim 7, a reference value is provided in the thruster orientations and thruster thrusts, and a combination of thruster orientations is selected based on those reference values. Specifically, configuring α0 and β0 which is a combination of left-right symmetrical thruster orientations when performing forward-reverse movement in the cruising mode mentioned below and thruster thrusts Tl0 and Tr0 corresponding to this α0 and β0 as reference values, a combination is selected for thruster orientation differences $|\alpha 2 - \alpha 0|$ and $|\beta 2 - \beta 0|$ and thruster thrust differences $|Tl2 - Tl0|$ and $|Tr2 - Tr0|$ such that, as a ratio, the largest values become the minimum. Thereby, the selection of a combination of thruster orientations α, β and thruster thrusts Tl, Tr does not depend on the progress of navigation, there is reproducibility in selections, and the action of a ship maneuvering system becomes stable. As similar ideas: a combination can be selected such that the largest value becomes the minimum only for thruster orientation differences $|\alpha 2 - \alpha 0|$ and $|\beta 2 - \beta 0|$ without taking into consideration the thruster thrust differences such as in the invention of Claim 3; a combination can be selected such that the maximum from amongst estimated attainment times becomes the minimum such as in the invention of Claim 5; and a combination can also be selected in a selectable range when considering other elements such as in the invention of Claim 6.

According to the invention of Claim 8, thruster thrusts Tl, Tr can be produced to near the upper limits thereof, according to thruster orientation $\eta$. Even in the translational movement mode, thruster thrusts Tl, Tr in the tilt orientation angle $\eta$ near the forward movement direction or reverse movement direction can be produced to near the upper limit, thus enabling a voyage to near the highest speed.

According to the invention of Claim 9, by re-selecting the combination of thruster orientations and thruster thrusts, the total of the thruster thrusts can be made to be a minimum, whilst maintaining the target thrust. For example, it is presumed that a working boat such as a tugboat performs voyaging by performing the same maneuvering for not less than a certain period of time in a translational movement mode, in order to move in a bay. If, as mentioned above, a control device selects a combination such that a thruster orientation difference before and after operation becomes the minimum, the total of the thruster thrusts of such combination does not necessarily become the minimum, and there are cases where it is disadvantageous for such a state to be maintained from an efficiency aspect. Thus, if the state in which the same first maneuvering quantity and second maneuvering quantity are outputted exceeds a prescribed period of time, another combination in which the total of the thruster thrusts becomes smaller is selected and a pair of azimuth thrusters controlled so as to change stepwise from the present combination to another combination, to thereby enable the fuel consumption amount to be suppressed lower whilst maintaining target thrust. Although it is also possible to immediately change from the present combination to another combination, with a gradual change, the present combination can be shifted to a combination in which the thrust smoothly becomes the minimum.

There are cases where the hull orientation changes due to a disturbance such as fluid force or wind etc. acting on the hull. According to the invention of Claim 9, by operating the maneuvering device, a third maneuvering quantity instructing a swing of a hull or a change in hull orientation is outputted to the control device from the maneuvering device, and by changing thruster orientation or thruster thrust of a pair of, or one of azimuths, the hull orientation which changed due to a disturbance such as fluid force or wind etc. can be corrected.

Although a combination of thruster orientation $\alpha$ and thruster orientation $\beta$ made to produce target thrust can be calculated from Relational Formula 1, there are cases where the hull orientation changes due to a disturbance such as fluid force or wind etc. acting on the hull. According to the invention of Claim 11, a target swing component M made to be produced at a hull is determined by means of a third maneuvering quantity, and if providing this target swing component, an angle $\theta$ which is a fixed value determined from the structure and equipment of a boat, and a traversing component Fx and forward-reverse moving component Fy of a target thrust which is determined by a first maneuvering quantity and a second maneuvering quantity outputted by operation of a maneuvering device, the relationship of the thruster orientation $\alpha$ at port and thruster orientation $\beta$ at starboard is expressed in Relational Formula 2. By utilizing Relational Formula 2 which includes the target swing component M in the calculation of the combination of thruster orientation $\alpha$ and thruster orientation $\beta$, a combination of thruster orientation $\alpha$ and thruster orientation $\beta$ with the added correction of the hull orientation can be calculated.

The correction of the hull orientation in the inventions of the aforementioned Claims 10 and 11 takes place by applying a portion of the thrust of the hull to the swing of the hull. Thus, when a disturbance such as a large fluid force or wind etc. acts on the hull, the swing component necessary for correction also becomes large, which may exceed the maximum thrust which can be produced by the azimuth thrusters. According to the invention of Claim 12, by reducing the target thrust of a hull determined according to the first maneuvering quantity and the second maneuvering quantity, and distributing the reduced portion of the target thrust to the swing component to obtain a swing component of a size necessary for correction, a combination of thruster orientations and thruster thrusts, whose thruster thrusts are not more than maximum thrust, can be calculated.

The aforementioned Claim 12 is a method for distributing a portion of the thrust which should actually be expended in the translational movement to a swing component, whilst performing translational movement. However, even if the thrust expended in translational movement is in a state of infinitely approaching zero, there are cases where hull orientation cannot be completely corrected. According to the invention of Claim 13, the thruster orientation is configured as an angle at which a swing component becomes larger (for example, an angle perpendicular to angle $\theta$, from a straight line connecting the center of gravity of a hull with a turning center of a thruster of the azimuth thrusters, to a center line of the hull etc.), where hull orientation can be efficiently corrected by changing the thruster thrusts.

In the correction of the hull orientation in the inventions of the aforementioned Claims 10 to 13, because the operator needs to visually check the hull orientation to operate the maneuvering device, a time delay occurs. According to the invention of Claim 14, the control device acquires the actual hull orientation from nautical instruments equipped at the hull, and determines the target swing component M such that the difference of the actual hull orientation and the target hull orientation (hereinunder referred to as "orientation angle deviation") is made to be zero, to thereby achieve correction of the hull orientation. Moreover, since no operator intervenes, the occurrence of a time delay can also be suppressed. This control is hereinunder referred to as "orientation angle control".

According to the invention of Claim 15, a hull orientation can be corrected by performing an orientation angle PD control, in which a target swing component is configured as a value obtained by adding: a value obtained by multiplying an orientation angle deviation with a coefficient; to a value further obtained by time differentiating an orientation angle deviation. The orientation angle PD control can predict an orientation angle change, and can quickly hold the orientation, by a control of combining a swing angular velocity (D control) which is a differential component of hull orientation, with orientation angle control (P control). Although the swing angular velocity of hull orientation is calculated from the orientation angle deviation, a measuring device measuring swing angle acceleration may also be provided and utilized in the control.

According to the invention of Claim 16, by means of the cascade control of the orientation angle control and swing angular velocity feedback, an orientation change of the hull can be suppressed whilst the orientation of the hull approaches the target hull orientation. Regarding the swing velocity, a measuring device measuring this swing velocity may also be provided, or if there is no measuring device measuring swing angular velocity, the orientation angle deviation may also be differentiated and utilized in the control.

According to the invention of Claim 17, by combining the manually operated correction by the operator such as in Claims 11 and 12 with the orientation angle control of Claim 14, the orientation angle PD control of Claim 15, or the cascade control of Claim 16, the operator can arbitrarily perform manually operated correction of the hull orientation whilst enabling automatic correction of the hull orientation, and hence time delay until correction can be shortened whilst performing conscious orientation correction.

In order to automatically correct the hull orientation, an operator must manually input the target value of the hull orientation angle, or must perform a special operation such as setting up the present hull orientation as a target value by means of a button operation. However, according to the invention of Claim 18, if an operator looks at the hull orientation and the hull is headed towards an orientation where progress should be made in this orientation, a third maneuvering quantity is made to be zero, and thereby the aforementioned special operation becomes unnecessary.

According to the invention of Claim 19, in addition to the translational movement mode, the control device is provided with a cruising mode which can arbitrarily maneuver a hull during movement over mid- to long distances, and hence a cruising mode is selected during movement over mid- to long distances. By selecting the translational movement mode when de-berthing and positioning, voyaging can take place by sufficiently leveraging the basic performance and function of a ship, according to the objective such as voyaging or movement. Regardless of the operation mode, by rendering the maneuvering device to a neutral position (a first maneuvering quantity and a second maneuvering quantity being zero), the thruster orientations of a pair of azimuth thrusters are made to be facing inward straight sideways, and the hull is kept in a stop state, in the state where the pair of azimuth thrusters mutually cancel out the thrust vectors whilst producing thrust, and thereby change in the position and orientation of the hull due to disturbance such as wind can be suppressed. Moreover, when the ship has speed, in this state, a braking force can be applied at the hull, thereby quickly enabling a speed reduction into a stop.

According to the invention of Claim 20, in the cruising mode, navigation can be performed by a third maneuvering quantity (action of twisting the head of the handlebar) instead of a first maneuvering quantity (action of bringing down the handlebar to the desired orientation angle). Moreover, as an action of changing an azimuth orientation by a first maneuvering quantity and a third maneuvering quantity, for example, if the hull orientation has deviated from the intention of the operator whilst bringing the handlebar down to instruct a turning (a first maneuvering quantity), this can be rectified by head twisting of the handlebar (a third maneuvering quantity).

According to the invention of Claim 21, because a first maneuvering quantity or a second maneuvering quantity can be remotely provided to the control device, crew do not need to ride aboard the hull to operate the maneuvering device in order to maneuver the ship, and maneuvering of a hull can take place remotely and precisely even though the crew do not ride aboard the hull to operate the maneuvering device. Moreover, a third maneuvering quantity may also be remotely provided as desired.

According to the invention of Claim 22, a towing/auxiliary boat can be remotely maneuvered from a large boat by providing, for example, a receiver of a remote maneuvering device aboard a towing or auxiliary boat such as a tugboat, and a transmitter of a remote maneuvering device aboard a large boat such as a tanker which cannot move finely in a narrow place.

## Brief Description of Drawings

[Fig. 1] is a functional block diagram of a ship maneuvering system of the embodiment.

[Fig. 2A] is a drawing for explaining the forward movement of the cruising mode and is a plan view illustrating the operation of a maneuvering device, in a ship maneuvering system of the embodiment.

[Fig. 2B] is a drawing for explaining the forward movement of the cruising mode and is a schematic plan view illustrating the thruster orientations of the azimuth thrusters at the hull, in a ship maneuvering system of the embodiment.

[Fig. 2C] is a drawing for explaining the forward movement of the cruising mode, and is a schematic plan view illustrating the thruster orientations of the azimuth thrusters at the hull, in a ship maneuvering system of the embodiment.

[Fig. 3A] is a drawing for explaining the straight advancing turning during the forward movement of the cruising mode and is a plan view illustrating the operation of a maneuvering device, in a ship maneuvering system of the embodiment.

[Fig. 3B] is a drawing for explaining the straight advancing turning during the forward movement of the cruising mode and is a plan view illustrating the operation of a maneuvering device, in a ship maneuvering system of the embodiment.

[Fig. 3C] is a drawing for explaining the straight advancing turning during the forward movement of the cruising mode and is a schematic plan view illustrating the thruster orientations of the azimuth thrusters at the hull, in a ship maneuvering system of the embodiment.

[Fig. 4A] is a drawing for explaining the reverse movement of the cruising mode and is a plan view illustrating the operation of a maneuvering device, in a ship maneuvering system of the embodiment.

[Fig. 4B] is a drawing for explaining the reverse movement of the cruising mode and is a schematic plan view illustrating the thruster orientations of the azimuth thrusters at the hull, in a ship maneuvering system of the embodiment.

[Fig. 4C] is a drawing for explaining the reverse movement of the cruising mode and is a schematic plan view illustrating the thruster orientations of the azimuth thrusters at the hull, in a ship maneuvering system of the embodiment.

[Fig. 5A] is a drawing for explaining the reverse turning movement of the cruising mode and is a schematic plan view illustrating the operation of a maneuvering device, in a ship maneuvering system of the embodiment.

[Fig. 5B] is a drawing for explaining the reverse turning movement of the cruising mode and is a plan view illustrating the operation of a maneuvering device, in a ship maneuvering system of the embodiment.

[Fig. 5C] is a drawing for explaining the reverse turning movement of the cruising mode and is a schematic plan view illustrating the thruster orientations of the azimuth thrusters at the hull, in a ship maneuvering system of the embodiment.

[Fig. 6A] is a drawing for explaining the neutral stop of the cruising mode and is a plan view illustrating the operation of a maneuvering device, in a ship maneuvering system of the embodiment.

[Fig. 6B] is a drawing for explaining the neutral stop of the cruising mode and is a schematic plan view illustrating the thruster orientations of the azimuth thrusters at the hull, in a ship maneuvering system of the embodiment.

[Fig. 7A] is a drawing for explaining the relationship between the operation of the handlebar during forward movement of the cruising mode and the thruster thrusts of a pair of azimuth thrusters, and is a plan view illustrating the operation of a maneuvering device, in a ship maneuvering system of the embodiment.

[Fig. 7B] is a drawing for explaining the relationship between the operation of the handlebar during forward movement of the cruising mode and the thruster thrusts of a pair of azimuth thrusters, and is a schematic plan view illustrating the thruster orientations, thruster thrusts and composite thrusts T of the azimuth thrusters at the hull, in a ship maneuvering system of the embodiment.

[Fig. 7C] is a drawing for explaining the relationship between the operation of the handlebar during forward movement of the cruising mode and the thruster thrusts of a pair of azimuth thrusters, and is a graph illustrating the relationship between a second maneuvering quantity H and the size of the composite thrusts T of a pair of azimuth thrusters, in a ship maneuvering system of the embodiment.

[Fig. 8] is a drawing for explaining the relationship of handlebar position during operation of the cruising mode (tilt orientation angle $\eta$ and tilt amount H), and the thruster orientations and thruster thrusts of a pair of azimuth thrusters, and is a schematic plan view illustrating the vectors of the thruster thrusts with respect to the operating handlebar position, in a ship maneuvering system of the embodiment.

[Fig. 9] is a plan view illustrating the operation of a maneuvering device in the translational movement mode and is a drawing for explaining the forward-reverse movement, traverse movement, oblique movement and neutral stop, in a ship maneuvering system of the embodiment.

[Fig. 10A] is a drawing for explaining the neutral stop of the translational movement mode and is a plan view illustrating the operation of a maneuvering device, in a ship maneuvering system of the embodiment.

[Fig. 10B] is a drawing for explaining the neutral stop of the translational movement mode and is a schematic plan view illustrating the thruster orientations of the azimuth thrusters at the hull, in a ship maneuvering system of the embodiment.

[Fig. 11A] is a drawing for explaining the hull movement in the translational movement mode (forward-reverse movement, traverse movement, oblique movement), and is a drawing illustrating the relationship between a first maneuvering quantity $\eta$ and a second maneuvering quantity H, and a traversing component Fx and a forward-reverse moving component Fy of target thrust outputted by the operation of a maneuvering device, in a ship maneuvering system of the embodiment.

[Fig. 11B] is a drawing for explaining the hull movement in the translational movement mode (forward-reverse movement, traverse movement, oblique movement), and is a schematic plan view illustrating thruster orientations $\alpha$ and $\beta$ and thruster thrusts Tl and Tr etc. of a pair of azimuth thrusters at the hull, in a ship maneuvering system of the embodiment.

[Fig. 12] are drawings for explaining the technique for the control device to calculate and select combinations of thruster orientations and thruster thrusts of a pair of azimuth thrusters which produce the target thrust, in which Relational Formula 1, calculated each for six different tilt orientation angles η (0° to 135°) in the maneuvering device were made into graphs, in the translational movement mode of the ship maneuvering system of the embodiment.

[Fig. 13] are drawings for explaining the technique for the control device to calculate and select combinations of thruster orientations and thruster thrusts of a pair of azimuth thrusters which produce the target thrust, in which Relational Formula 1, calculated each for six different tilt orientation angles η (165° to -45°) in the maneuvering device were made into graphs, in the translational movement mode of the ship maneuvering system of the embodiment.

[Fig. 14A] is a drawing of a graph of Relational Formula 1, calculated for a specific tilt orientation angle η (5°) in the maneuvering device, which displays selectable regions in which a selectable combination exists when realistic conditions are applied for the thruster thrusts, for explaining the technique for the control device to calculate and select combinations of thruster orientations and thruster thrusts of a pair of azimuth thrusters which produce the target thrust, in the translational movement mode of the ship maneuvering system of the embodiment.

[Fig. 14B] is a partially expanded view of a portion of the selectable regions of Fig. 14A, and is a drawing explaining the control of shifting the originally selected value of the thruster thrusts of a pair of azimuth thrusters, to another combination in which the total value is smaller.

[Fig. 15] is a drawing for explaining the correction of the hull orientation in the translational movement mode, and is a plan view illustrating a third maneuvering quantity R outputted by operation of a maneuvering device, in a ship maneuvering system of the embodiment.

[Fig. 16A] is a drawing for explaining the limits of the correction capability of the hull orientation and improvement thereof, and is a schematic plan view illustrating thruster orientations of the azimuth thrusters distributing a portion of the thrust to a swing component whilst keeping the translational movement of the hull, in the translational movement mode of the ship maneuvering system of the embodiment.

[Fig. 16B] is a drawing for explaining the limits of the correction capability of the hull orientation and improvement thereof, and is a schematic plan view illustrating thruster orientations of the azimuth thrusters which sacrifice translational movement to utilize full thrust in hull correction, in the translational movement mode of the ship maneuvering system of the embodiment.

[Fig. 17] are drawings for explaining the technique for the control device to calculate and select combinations of thruster orientations and thruster thrusts of a pair of azimuth thrusters which produce the target thrust, and is a graph of Relational Formula 1, calculated for a specific tilt orientation angle η (50°) in the maneuvering device, in the translational movement mode of the ship maneuvering system of the embodiment.

[Fig. 18A] is a drawing for explaining the remote navigation and is a schematic plan view illustrating the hulls of which the ship maneuvering system 1 of the present embodiment is mounted (tugboats 21, 22) and the main boat which is moved by such hulls (large boat 100), in the translational movement mode of the ship maneuvering system of the embodiment.

[Fig. 18B] is a drawing for explaining the remote navigation and is a schematic plan view illustrating the handlebar which is a remote navigation device in the main boat, in the translational movement mode of the ship maneuvering system of the embodiment.

[Fig. 18C] is a drawing for explaining the remote navigation and is a schematic plan view illustrating the handlebar which is a remote navigation device in the main boat, in the translational movement mode of the ship maneuvering system of the embodiment.

Description of Embodiments

An embodiment of the ship maneuvering system according to the present invention will be explained referring to Figs. 1 to 18 (hereinunder, the drawing numbers of all drawings which include English lettering may be illustrated as necessary by numbers only, with the English lettering omitted).

(I) Configuration of the ship maneuvering system

First, the configuration of ship maneuvering system 1 is explained referring to Fig. 1, Fig. 2A, Fig. 2B and Fig. 2C.

As illustrated in Fig. 1, the ship maneuvering system 1 is provided with a pair of azimuth thrusters 10, 10 as propulsion devices also provided with the function of a steering rudder device. The azimuth thruster 10 has a motive force transmission device and a turning device of the aforementioned propeller. In the motive force transmission device of azimuth thruster 10, output shafts 6, 6 of engines 5, 5 are each cooperatively connected by a clutch (not shown), and the driving force of engine 5 is transmitted from output shaft 6 to propeller shaft 2, so as to be able to drive propeller 3. The propeller 3 may also be driven with an electrically driven motor. In a turning device of azimuth thruster 10, a motor 4 is configured as a drive source, the driving force of motor 4 is transmitted to propeller 3, so as to be able to turn only in the desired direction and desired angle. Accordingly, desired propulsion force provided to propeller 3 can be increased or decreased by controlling engine 5, and propeller 3 can be made to turn about a vertical axis in all directions at 360° by controlling motor 4.

The pair of azimuth thrusters 10, 10 mentioned above which the ship maneuvering system 1 shown in Fig. 1 has, is provided at the back of hull 7 so as to be left-right symmetrical in relation to the center line CL of hull 7, as illustrated in Fig. 2B and Fig. 2C.

As illustrated in Fig. 1, the ship maneuvering system 1 is provided with control device 8. The control device 8 controls engine 5 via engine control unit 5a in accordance with a command from maneuvering device 9, and thereby the thrusts of each of the azimuth thrusters 10,10 (thruster thrusts) can be arbitrarily set up. Moreover, the control device 8 controls motor 4 for turning the azimuth thrusters 10, and thereby the orientation angle of the thruster thrusts (thruster orientations) can be arbitrarily set up. The control device 8 is provided with two navigation modes called the cruising mode and the translational movement mode, which can control azimuth thrusters 10 by switching to the required mode. Although details of these two navigation modes are mentioned below, the cruising mode is a navigation mode for simplifying maneuvering such as when voyaging takes place over mid- to long distances, and the translational movement mode is a navigation mode providing high-level maneuverability by a simple operation when de-berthing and positioning.

The maneuvering device 9 provided in the ship maneuvering system 1 shown in Fig. 1 is a joystick type device as illustrated in Fig. 2A, where a rod-shaped handlebar 11 can be tilted in any direction for all directions in 360°. A first maneuvering quantity, which is a maneuvering signal corresponding to the angle showing the tilted direction of handlebar 11 (tilt orientation angle $\eta$ mentioned below with explanation in relation to Fig. 11A) and which instructs the direction of travel of the hull, can be outputted to control device 8. Moreover, a second maneuvering quantity, which is a maneuvering signal corresponding to the tilt amount of handlebar 11 in the direction thereof (tilt amount H mentioned below with explanation in relation to Fig. 11A) and which instructs a propulsion force of the hull, can be outputted to control device 8. Furthermore, a gripping portion 12 at the upper end portion of handlebar 11 is rotatable in the plane orthogonal to the longitudinal direction of handlebar 11, and a third maneuvering quantity, which is a maneuvering signal corresponding to the angle of rotation thereof (steering angle Z of handlebar 11 mentioned below with explanation in relation to Fig. 15) and which instructs a swing of a hull or a change in hull orientation, can be outputted to control device 8.

Although the embodiment is configured so that the first to third maneuvering quantities can be outputted by means of a single maneuvering device 9, the embodiment may also be configured so that a joystick outputs a first and a second maneuvering quantity by sensing, with a potentiometer etc. respectively provided, the tilt amount of the X-axis direction and tilt amount of the Y-axis direction of an XY coordinate system shown in Fig. 2B mentioned below. Moreover, the embodiment may also be configured so that at least a first and a second maneuvering quantity can be outputted merely by operation of the stick-shaped handlebar, by means of a joystick type maneuvering device with no gripping portion 12. In addition to this maneuvering device, the embodiment may also be configured so that a third maneuvering quantity is outputted by providing a dial operation type second maneuvering device or a two-button type second maneuvering device instructing left rotation and right rotation, or the embodiment may also be configured so that the gripping portion 12 is integrated with handlebar 11, and a third maneuvering quantity is outputted by twisting the entire handlebar (by rotating it). Moreover, the embodiment may also be configured so that a maneuvering device which can output the first to third maneuvering quantities is not a joystick type. Moreover, the embodiment may also be configured so that when the crew (operator) is away from the maneuvering device, the maneuvering device either configures maneuvering quantity to be zero by returning to zero points, or maintains the immediately preceding maneuvering quantity without returning to zero points.

Although the maneuvering device 9 of the ship maneuvering system 1 shown in Fig. 1 is mounted to hull 7 shown in Fig. 2B, and is a device which the crew (operator) of the ship manually operates, in addition to this manual operated maneuvering device 9, a receiver 16 of remote maneuvering device 15 may also be mounted to hull 7, as illustrated in Fig. 1. In this case, a transmitter 17 of a remote maneuvering device 15 is provided outside of hull 7, which provides maneuvering signals (first to third maneuvering quantities mentioned above and other required signals) to the control device 8, with a communication means such as electromagnetic waves via receiver 16 from outside of the hull 7. The place to provide transmitter 17 may be another ship, and may also be any fixed or moving maneuvering base location provided at sea, on land, in air, or in space. Moreover, although not shown, an information acquisition means such as a measuring device, sensor, camera, radar, sonar may also be provided in hull 7 to monitor the speed or hull orientation of hull 7, the speed at which the hull orientation of hull 7 changes (hereinunder, swing angular velocity), or the situation surrounding the periphery of hull 7 etc. The embodiment may also be configured so that when using this information acquisition means to perform automatic correction of hull orientation (details are mentioned below) or to perform maneuvering of hull 7 by means of remote maneuvering device 15, the information acquired by the information acquisition means is remotely sent to another ship or maneuvering base location at which transmitter 17 was installed outside of the hull 7. The maneuvering device 9 and remote maneuvering device 15 can be arbitrarily switched and utilized.

(II) Cruising mode and translational movement mode

The navigation function of control device 8 in ship maneuvering system 1 is explained next. The ship maneuvering system 1 of the embodiment has the cruising mode and translational movement mode as mentioned above as maneuvering modes of hull 7.

The cruising mode is a navigation mode in which forward movement (straight advancing, right turning, left turning), neutral stop, and reverse movement (straight advancing, right turning, left turning) of hull 7 take place by means of operation of the handlebar 11 and gripping portion 12 of maneuvering device 9, primarily for the objective of mid- to long distance movement of a ship.

The translational movement mode is a navigation mode in which forward movement (straight advancing), reverse movement (straight advancing), neutral stop of hull 7, as well as traverse movement (left-right) in which hull 7 is made to perform translational movement towards the left-right direction, and oblique movement in which hull 7 is made to perform translational movement in a diagonal direction, take place by means of operation of the handlebar 11 of maneuvering device 9, primarily for the objective of de-berthing and positioning of a ship. In the translational movement mode, when the orientation of hull 7 is changed during translational movement, orientation correction of hull 7 can also be performed by operation of the gripping portion 12 of handlebar 11 of maneuvering device 9.

In the explanation below, an XY coordinate system shown in Fig. 2B and Fig. 2C is utilized as a coordinate system illustrating the thruster orientations of azimuth thrusters 10 and the direction of travel of hull 7. Although this coordinate system is displayed only in Fig. 2B and Fig. 2C, other drawings are also explained by means of a similar coordinate system. In this XY coordinate system, the straight advancing direction of hull 7 is configured as the Y-axis in the positive direction, the right straight sideways direction of hull 7 is configured as the X-axis in the positive direction, and the rotation axis when hull 7 swings or turns is configured as the Z-axis. In the swing of hull 7 about the Z-axis, the Y-axis in the positive direction is configured as 0°, and is configured by expressing this as angles of 0° to 180° for turning right, and 0° to -180° for turning left. The origin of each coordinate axis is the center of gravity G of hull 7.

(III) Explanation regarding cruising mode

The cruising mode is explained referring to Figs. 2 to 8.

Fig. 2 are drawings explaining the forward movement of the cruising mode.

When hull 7 is made to move forward, an operator brings handlebar 11 of maneuvering device 9 down towards the front as shown by the arrow in Fig. 2A. The maneuvering device 9 outputs a first maneuvering quantity and a second maneuvering quantity, which are maneuvering signals of the handlebar corresponding to a tilt orientation angle $\eta$ and tilt amount H. The control device 8 changes the thruster orientations and thruster thrusts according to output signals of this maneuvering device 9. For example, if handlebar 11 is brought down towards the front to the maximum; namely, to the limit, the control device 8 configures the thruster orientations of azimuth thrusters 10 at both port and starboard as 0°, and thruster thrusts (or propeller rotation speed and engine output) at both port and starboard are also identically configured to be at maximum, as illustrated in Fig. 2B. The hull can thereby be made to move.

If handlebar 11 is not brought down towards the front to the maximum limit, the control device 8 changes the thruster orientations and thruster thrusts of azimuth thrusters 10 at both port and starboard according to tilt amount H, as illustrated in Fig. 2C. Specifically, thruster orientations become small and thruster thrusts become large to the extent that tilt amount H is large. Here, thruster orientations becoming small means that the thruster orientations are approaching 0°. Accordingly, the thruster orientations approach 0° to the extent that handlebar 11 is brought down towards the front. In this way, the thruster orientations of a pair of azimuth thrusters approaching 0° and the production of a larger thrust in a forward movement direction are henceforth expressed as increasing the forward movement component of thruster orientations. Moreover, to the extent that tilt amount H is small, thruster orientations are changed to become large and thruster thrusts are changed to be small. Here, the thruster orientations becoming large mean that the thruster orientations approach 90° or -90°. Accordingly, to the extent that handlebar 11 is raised up, the thruster orientations approach 90° or -90°. When the tilt amount H of handlebar 11 is 0, the thruster orientations become a thruster orientation $\alpha$ = 90° and a thruster orientation $\beta$ = -90°, and become an initial value at which the thruster orientations are left-right symmetrical and side-facing with respect to the hull. By controlling the thruster orientations and thruster thrusts as above, when handlebar 11 is changed from forward movement to reverse movement, the hull's direction of travel can be quickly and smoothly changed.

Fig. 3 are drawings explaining the straight advancing turning during the forward movement of the cruising mode.

The operator who tries to turn the hull 7 during a voyage in forward movement performs an operation of rotating the gripping portion 12 of handlebar 11 of maneuvering device 9 to a desired direction as shown by the arrow in Fig. 3A, or performs an operation of bringing the handlebar 11 of maneuvering device 9 down to a desired direction as shown by the arrow in Fig. 3B. In Fig. 3A the gripping portion 12 is rotated in the leftward direction, and in Fig. 3B the handlebar 11 is brought down to the leftward direction. When performing the operation of Fig. 3A, a second maneuvering quantity and a third maneuvering quantity are outputted from maneuvering device 9, and when performing the operation of Fig. 3B, a second maneuvering quantity and a first maneuvering quantity are outputted from maneuvering device 9. In cruising mode, a first maneuvering quantity and a third maneuvering quantity can both be handled compatibly as a maneuvering quantity instructing the swing of the hull.

The control device 8 receives output of maneuvering device 9 to calculate thruster orientations $\alpha$, $\beta$. Firstly, the received first maneuvering quantity or a third maneuvering quantity are not utilized; namely, the tilt orientation angle $\eta$ or handlebar steering angle (rotation angle of gripping portion 12) Z are configured as zero, and the forward movement component of thruster orientations and thruster thrusts are increased/decreased according to tilt amount H similarly to the aforementioned forward movement. The thruster orientations obtained only from tilt amount H are respectively configured as $\alpha'$, $\beta'$, and a value obtained by multiplying tilt orientation angle $\eta$ and steering angle Z received by control device 8, respectively with coefficients A and B ($0 \leq A, B \leq 1$) as shown in the below formula, is subtracted from such $\alpha'$, $\beta'$ to calculate thruster orientations $\alpha$, $\beta$. By changing these thruster orientations, the hull can be made to perform straight advancing turning in any direction desired by the operator.

$$\alpha = \alpha' - A \cdot \eta - B \cdot Z$$

$$\beta = \beta' - A \cdot \eta - B \cdot Z$$

By setting up coefficients by means of control device 8 as follows, either Fig. 3A or Fig. 3B, or both can be made to be effective as the operating method of handlebar 11.

A = 1, B = 0: Effective only for tilt orientation angle $\eta$
A = 0, B = 1: Effective only for steering angle Z
A = 1, B = 1: Effective for tilt orientation angle $\eta$ and steering angle Z

Moreover, for the coefficient, a numerical value of a decimal point or less may also be set up. For example, by configuring, e.g.

A= 1, B = 0.1
Operation of bringing handlebar 11 down to a desired direction: Basic turning operation
Operation of rotating the gripping portion 12 of handlebar 11 to a desired direction: Fine tuning

These can also be used in combination. This also applies in the reverse turning movement mentioned below.

For example, when performing the operation of Fig. 3B, the control device 8 increases the forward movement component of the thruster orientations and the thruster thrusts according to the received tilt orientation angle $\eta$ and tilt amount H. The thruster orientations approach 0° to the extent that handlebar 11 is brought down, and the thruster orientations approach 90° or -90° to the extent that handlebar 11 is raised up. The tilt orientation angle $\eta$ is subtracted from such thruster orientations $\alpha'$, $\beta'$ as in the below formula to calculate the thruster orientations. If handlebar 11 is brought down forward diagonally 10° to maximum, since the thruster orientations $\alpha'$, $\beta'$ become 0° and the tilt orientation angle $\eta$ becomes 10°, the thruster orientations $\alpha$, $\beta$ become -10°.

$$\alpha = \alpha' - \eta$$

$$\beta = \beta' - \eta$$

Then, as in Fig. 3C, the thruster orientations and thruster thrusts at both port and starboard are changed, producing a swing component as shown by the arrow around the center of gravity G of hull 7. The hull can thereby be made to turn in any direction.

Fig. 4 are drawings explaining the reverse movement of the cruising mode.

If hull 7 is made to move in reverse, the operator brings handlebar 11 of maneuvering device 9 down towards oneself, as shown by the arrow in Fig. 4A. The maneuvering device 9 outputs a first maneuvering quantity and a second maneuvering quantity, which are maneuvering signals of the handlebar corresponding to a tilt orientation angle $\eta$ and tilt amount H, and control device 8 changes the thruster orientations and thruster thrusts according to the output signals of this maneuvering device 9. For example, if handlebar 11 is brought down towards oneself to the maximum, the control device 8 configures the thruster orientations of azimuth thrusters 10, 10 at both port and starboard as 180° or -180°, and thruster thrusts at both port and starboard are also identically configured to be the same and at maximum, as illustrated in Fig. 4B. The hull can thereby be made to move in reverse.

If handlebar 11 is not brought down towards the back to the maximum limit, the control device 8 receives a signal from maneuvering device 9, and changes the thruster orientations of azimuth thrusters 10 at both port and starboard according to tilt amount H, as illustrated in Fig. 4C. Specifically, the thruster orientations approach 180° or -180° and thruster thrusts become large to the extent that tilt amount H is large. Namely, the thruster orientations approach 180° or -180° to the extent that handlebar 11 is brought down towards the back. In this way, the thruster orientations of a pair of azimuth thrusters approaching 180° or -180°, and the production of a larger thrust in a reverse movement direction are henceforth expressed as increasing the reverse movement component of the thruster orientations. Moreover, the aforementioned forward movement component and reverse movement component are expressed in combination as a forward-reverse moving component. Moreover, to the extent that tilt amount H is small, the thruster orientations change to become large and the thruster thrusts change to become small. Here, the thruster orientations becoming large means that the thruster orientations approach 90° or -90°. Accordingly, to the extent that handlebar 11 is raised up, the thruster orientations approach 90° or -90°. By controlling the thruster orientations and thruster thrusts as above, when handlebar 11 is changed from reverse movement to forward movement, the hull's direction of travel can be quickly and smoothly changed.

Fig. 5 are drawings explaining the reverse turning movement of the cruising mode.

The operator who tries to turn the hull 7 during voyage in reverse movement performs an operation of rotating the gripping portion 12 of handlebar 11 of maneuvering device 9 to a desired direction as shown by the arrow in Fig. 5A, or performs an operation of bringing the handlebar 11 of maneuvering device 9 down to a desired direction as shown by the arrow in Fig. 5B. In Fig. 5A, the gripping portion 12 rotated in the leftward direction, and in Fig. 5B the handlebar 11 is brought down to the rightward direction. When performing the operation of Fig. 5A, a second maneuvering quantity and a third maneuvering quantity are outputted from maneuvering device 9, and when performing the operation of Fig. 5B, a second maneuvering quantity and a first maneuvering quantity are outputted from maneuvering device 9. The control device 8 receives output of maneuvering device 9 to calculate thruster orientations $\alpha$, $\beta$. Firstly, the received first maneuvering quantity or a third maneuvering quantity are not utilized; namely, the tilt orientation angle $\eta$ or steering angle Z are configured as zero, the thruster orientations $\alpha$, $\beta$ are obtained according to tilt amount H similarly to that during the aforementioned forward movement, and are respectively configured as $\alpha'$, $\beta'$. Next, a value obtained by multiplying tilt orientation angle $\eta$ and steering angle Z received by control device 8 respectively with coefficients A and B ($0 \leq A, B \leq 1$) as shown in the below formula, is added to such $\alpha'$, $\beta'$ to calculate thruster orientations $\alpha$, $\beta$. By changing these thruster orientations, the hull can be made to perform a reverse turning movement in any direction desired by the operator.

$$\alpha = \alpha' + A \cdot \eta + B \cdot Z$$

$$\beta = \beta' + A \cdot \eta + B \cdot Z$$

Fig. 6 are drawings explaining the neutral stop of the cruising mode.

When initially in a stop state, or when hull 7 is made to stop after movement, the operator renders the handlebar 11 of maneuvering device 9 to be in a central position, as illustrated in Fig. 6A. In this state, the control device 8 having received a first maneuvering quantity and a second maneuvering quantity outputted from maneuvering device 9 renders the thruster orientations of thrusters 10, 10 at both port and starboard to be facing inward straight sideways, and the thruster thrusts at port and starboard are made to be the same, as illustrated in Fig. 6B. Thereby, the thrust vectors of the two azimuth thrusters 10, 10 cancel each other out, and hull 7 is maintained in a stop state without accelerating or decelerating.

Fig. 7 are drawings for explaining the relationship between the operation of the handlebar during forward movement of the cruising mode, and the thruster thrusts of a pair of azimuth thrusters, in the ship maneuvering system of the embodiment.

In the increase/decrease of the speed of the ship in cruising mode, a second maneuvering quantity is outputted according to an operation of handlebar 11 of maneuvering device 9, and the control device 8 having received this performs the same increase/decrease of the thruster thrusts of azimuth thrusters 10 at both port and starboard. Namely, in cruising mode, the thruster thrusts at port and the thruster thrusts at starboard are always the same. When handlebar 11 is brought down towards the front as illustrated Fig. 7A, and as illustrated in Fig. 7B, when the thruster orientation at port is configured as $\alpha$ and the thruster thrust at port is configured as Tl, and the thruster orientation at starboard is configured as $\beta$ and thruster thrust at starboard is configured as Tr, there is a resultant force of the thruster thrusts of the two azimuth thrusters 10, 10. Because the thrust in the left-right direction is cancelled which leaves only the front and back direction component, a composite thrust T, shown by the white arrow with black outline, which acts upon the center of gravity G of hull 7 is expressed by:

$$T = Tl \cos \alpha + Tr \cos \beta$$

. However, since the thrust vectors at both port and starboard are left-right symmetrical, this gives:

$$Tl = Tr$$

$$\beta = -\alpha$$

. A maximum value Tmax of thruster thrusts corresponding to tilt amount H of handlebar 11 is normally the rated rotation speed of a propeller of an azimuth thruster, and a minimum value Tmin of thrust is the thrust at propeller rotation speed in the neutral stop state mentioned below, where these values are configured to be changeable with parameters of control device 8 or with a switch such as knobs etc. attached to hull 7. This is because if the thrust becomes too large during sudden stopping etc., excessive vibration occurs in hull 7, so this can be adjusted according to the intention of the operator.

The amount of increase of the thruster thrusts and thruster orientations according to the operation of handlebar 11 is configured to be changeable with control device 8. If the coefficient of the amount of increase of the thruster thrusts is configured as C and the coefficient of the amount of increase of the thruster orientations is configured as D, as set up by control device 8, then:

$$Tl = C * H + Tmin$$

$$\cos \alpha = D * H$$

. However, this becomes:

$$C = (Tmax - Tmin) / Hmax$$

which is the minimum when the tilt amount H of handlebar 11 is in a neutral position, and which increases in proportion to the increase of tilt amount H, as illustrated in Fig. 6A. Moreover, the composite thrust T becomes:

$$T = Tl \cos \alpha + Tr \cos \beta$$

$$= Tl \cos \alpha + Tl \cos (-\alpha)$$

$$= 2\ Tl \cos \alpha$$

$$= 2\ (CH + Tmin)\ DH$$

$$= 2\ CDH^2 - 2\ Tmin\ DH$$

, and the composite thrust T is at the minimum when the tilt amount H of handlebar 11 is at the neutral position, and becomes large according to an increase of the tilt amount H squared, as illustrated in Fig. 7C. The point of being able to change the amount of increase of the thruster thrusts and thruster orientations based on an operation, by means of the setting of control device 8, is also the same when in the translational movement mode mentioned below.

Fig. 8 is a drawing explaining the position of handlebar 11 and the thrust vectors of the thrusters in cruising mode when the aforementioned coefficients A, C, D are 1, and B is zero. In Fig. 8, the upper half portion is the straight advancing and left-right turning region of forward movement, and the lower half portion is the straight advancing and left-right turning region of reverse movement. As mentioned above, thruster orientations are changed according to a first and third maneuvering quantity, and thruster thrusts are changed according to a second maneuvering quantity. Therefore, the thruster thrusts on the same circumference of Fig. 8 are the same. Although Fig. 8 includes 31 examples for the tilt orientation angle $\eta$, including forward movement which is 0°, the tilt orientation angle $\eta$ of handlebar 11 can be continuously set up or adjusted including these examples. However, when tilt orientation angle $\eta$ has gone from a turning operation region into the vicinity of $\pm 90°$, the action of the azimuth thrusters and the action of the hull becomes discontinuous and unnatural. Thus, when handlebar 11 is brought down in a straight sideways direction as shown as "left" or "right" in Fig. 7A, the current (immediately preceding) action is configured to be maintained. A certain width is provided in the vicinity of $\pm 90°$ to acknowledge the straight sideways region. Moreover, the size of tilt amount H of handlebar 11 corresponds to the distance from the center of Fig. 8.

(IV) Explanation regarding the translational movement mode

The translational movement mode is explained referring to Figs. 9 to 17.

Fig. 9 is a drawing exemplifying the tilt orientation angles $\eta$ of handlebar 11 which is a first maneuvering quantity of maneuvering device 9 operated in the translational movement mode, and includes nine examples including the central drawing where the tilt orientation angle $\eta$ is 0°. However, the tilt orientation angle $\eta$ of handlebar 11 can be set up or adjusted not only with these nine examples only, but continuously including these examples. The maneuvering device 9, similar to that of the cruising mode, outputs the tilt orientation angle as this first maneuvering quantity, to control device 8.

Moreover, although not shown in Fig. 9, by adjusting the extent to which handlebar 11 is brought down in a specific tilt orientation angle, the maneuvering device 9 outputs the tilt amount H of handlebar 11 which is a second maneuvering quantity, to control device 8. Furthermore, although not shown in Fig. 9, by rotating the gripping portion 12, the maneuvering device 9 outputs the steering angle Z of handlebar 11 which is a third maneuvering quantity, to control device 8, as in Fig. 15.

Fig. 10 are drawings explaining the neutral stop of the translational movement mode.

When initially in a stop state, or when hull 7 is made to stop after movement, the operator renders the handlebar 11 of maneuvering device 9 to be in a central position, as illustrated in Fig. 10A. In this state, the control device 8 having received a first maneuvering quantity and a second maneuvering quantity outputted from maneuvering device 9 renders the thruster orientations of thrusters 10, 10 at both port and starboard to be facing inward straight sideways, and the thruster thrusts at port and starboard are made to be the same, as illustrated in Fig. 10B. Thereby, the thrust vectors of two azimuth thrusters 10, 10 cancel each other out, and hull 7 is maintained in a stop state without accelerating or decelerating.

Fig. 11 are drawings for explaining the translational movement of the hull in the translational movement mode (forward-reverse movement, traverse movement, oblique movement). Because the forward-reverse movement and traverse movement can be handled as a portion of oblique movement, Relational Formula 1 of thruster orientations $\alpha$, $\beta$ and thruster thrusts Tr, Tl of a pair of azimuth thrusters 10, 10 is obtained when performing oblique movement on hull 7.

A traversing component and forward-reverse moving component of the target thrusts (vectors) acting on hull 7 is given by tilt orientation angle $\eta$ and tilt amount H of handlebar 11 of maneuvering device 9, as shown in Fig. 11 A:

$$Fx = H \sin \eta \quad \ldots \quad \text{Formula 1}$$

$$Fy = H \cos \eta \quad \ldots \quad \text{Formula 2}$$

Moreover, as shown in Fig. 11B, in the azimuth thrusters 10, 10 at both port and starboard, if the thruster orientations thereof are configured as $\alpha$, $\beta$ and the size of thruster thrusts thereof are configured as Tl, Tr, the composite thrusts of the X, Y component of thruster thrusts Tl, Tr become Fx, Fy and can be expressed as the following:

$$Fy = Tl \cos \alpha + Tr \cos \beta \quad \ldots \quad \text{Formula 3}$$

$$Fx = Tl \sin \alpha + Tr \sin \beta \quad \ldots \quad \text{Formula 4}$$

Meanwhile, since the swing components M (resultant forces of swing components Mr and Ml in the thruster thrusts at both port and starboard) cancel each other out during translational movement, as shown in Fig. 11B, the following is given:

$$Tl \sin(\alpha - \theta) + Tr \sin(\beta + \theta) = 0 \quad \ldots \quad \text{Formula 5}$$

. Here, θ expresses the angle formed by: the straight line L connecting the turning center of thrusters of a pair of azimuth thrusters 10, 10 which is symmetrical with respect to center line CL of hull 7, with the center of gravity G of hull 7; and the center line CL of hull 7. As mentioned above, if one of the thruster orientations is configured to face towards the center of gravity G, and the other thruster orientation is configured to face in opposition to the center of gravity G, the hull traverses. In actuality, whilst simultaneously changing the thruster orientations of at both port and starboard of the hull of which the present invention is applied, the orientation towards which the hull traverses can be found, and angle θ, formed by line L connecting each thruster position with the center of gravity G and the hull's reverse movement direction can be obtained, as in Fig. 11.

According to Formula 3,

$$Tr = (Fy - Tl \cos\alpha) / \cos\beta$$

and if this is substituted in Formula 5, the following is obtained:

$$Tl \sin(\alpha - \theta) + ((Fy - Tl \cos\alpha) / \cos\beta) * \sin(\beta + \theta) = 0$$

$$\Rightarrow Tl \sin(\alpha - \theta) = ((Tl \cos\alpha - Fy) / \cos\beta) * \sin(\beta + \theta)$$

$$\text{Right side} = ((Tl \cos\alpha - Fy) / \cos\beta) * (\sin\beta \cos\theta + \cos\beta \sin\theta)$$

$$= (Tl \cos\alpha - Fy) * (\tan\beta \cos\theta + \sin\theta)$$

$$\Rightarrow \sin(\alpha - \theta) / (\cos\alpha - Fy / Tl) = \tan\beta \cos\theta + \sin\theta \quad \ldots \quad \text{Formula 6}$$

According to Formula 4,

$$Tr = (Fx - Tl \sin\alpha) / \sin\beta$$

and substituting this in Formula 5, gives:

$$Tl \sin(\alpha - \theta) + ((Fx - Tl \sin\alpha) / \sin\beta) * \sin(\beta + \theta) = 0$$

$$\Rightarrow Tl \sin(\alpha - \theta) = ((Tl \sin\alpha - Fx) / \sin\beta) * \sin(\beta + \theta)$$

$$\text{Right side} = ((Tl \sin\alpha - Fx) / \sin\beta) * (\sin\beta \cos\theta + \cos\beta \sin\theta)$$

$$= (Tl \sin\alpha - Fx) * (\cos\theta + \sin\theta / \tan\beta)$$

$$\Rightarrow \sin(\alpha - \theta) / (\sin\alpha - Fx / Tl) = \cos\theta + \sin\theta / \tan\beta$$

$$\Rightarrow \sin(\alpha - \theta) / (\cos\theta + \sin\theta / \tan\beta) = \sin\alpha - Fx / Tl$$

$$\Rightarrow Fx / Tl = \sin\alpha - \sin(\alpha - \theta) / (\cos\theta + \sin\theta / \tan\beta)$$

$$\Rightarrow Tl = Fx / ((\sin\alpha - \sin(\alpha - \theta) / (\cos\theta + \sin\theta / \tan\beta)) \quad \ldots \quad \text{Formula 7}$$

Moreover, According to Formula 6, the following is given:

$$\cos\alpha - Fy / Tl = \sin(\alpha - \theta) / (\tan\beta \cos\theta + \sin\theta)$$

$$=> Fy / Tl = \cos\alpha - \sin(\alpha - \theta) / (\tan\beta \cos\theta + \sin\theta)$$

$$=> Tl = Fy / ((\cos\alpha - \sin(\alpha - \theta) / (\tan\beta \cos\theta + \sin\theta)) \quad \ldots \quad \text{Formula 8}$$

According to Formula 7 and 8, Tl is cancelled out:

$$Fx / ((\sin\alpha - \sin(\alpha - \theta) / (\cos\theta + \sin\theta / \tan\beta)) = Fy / ((\cos\alpha - \sin(\alpha - \theta) / (\tan\beta \cos\theta + \sin\theta))$$

$$=> Fx (\cos\alpha - \sin(\alpha - \theta) / (\tan\beta \cos\theta + \sin\theta)) = Fy (\sin\alpha - \sin(\alpha - \theta) / (\cos\theta + \sin\theta / \tan\beta))$$

$$=> Fx \cos\alpha - Fx \sin(\alpha - \theta) / (\tan\beta \cos\theta + \sin\theta) = Fy \sin\alpha - Fy \sin(\alpha - \theta) / (\cos\theta + \sin\theta / \tan\beta) \quad \ldots \quad \text{Relational Formula 1}$$

Furthermore, dividing both sides of Relational Formula 1 by $\sin(\alpha - \theta)$ gives:

$$Fx \cos\alpha / \sin(\alpha - \theta) - Fx / (\tan\beta \cos\theta + \sin\theta) = Fy \sin\alpha / \sin(\alpha - \theta) - Fy / (\cos\theta + \sin\theta / \tan\beta)$$

$$=> (Fx \cos\alpha - Fy \sin\alpha) / \sin(\alpha - \theta) = Fx / (\tan\beta \cos\theta + \sin\theta) - Fy / (\cos\theta + \sin\theta / \tan\beta)$$

$$= Fx / (\tan\beta \cos\theta + \sin\theta) - Fy \tan\beta / (\tan\beta \cos\theta + \sin\theta)$$

$$= (Fx - Fy \tan\beta) / (\tan\beta \cos\theta + \sin\theta)$$

, and cross multiplying the numerator and denominator gives:

$$(Fx \cos \alpha - Fy \sin \alpha)(\tan \beta \cos \theta + \sin \theta) = Fx \sin(\alpha - \theta) - Fy \tan \beta \sin(\alpha - \theta)$$

$$\Rightarrow (Fx \cos \alpha - Fy \sin \alpha) \tan \beta \cos \theta + (Fx \cos \alpha - Fy \sin \alpha) \sin \theta = Fx \sin(\alpha - \theta) - Fy \tan \beta \sin(\alpha - \theta)$$

$$\Rightarrow ((Fx \cos \alpha - Fy \sin \alpha) \cos \theta + Fy \sin(\alpha - \theta)) \tan \beta = Fx \sin(\alpha - \theta) - (Fx \cos \alpha - Fy \sin \alpha) \sin \theta$$

$$\Rightarrow \tan \beta = (Fx \sin(\alpha - \theta) - (Fx \cos \alpha - Fy \sin \alpha) \sin \theta) / ((Fx \cos \alpha - Fy \sin \alpha) \cos \theta + Fy \sin(\alpha - \theta))$$

, and becomes:

$$\text{Right side numerator} = Fx \sin \alpha \cos \theta - Fx \cos \alpha \sin \theta - Fx \cos \alpha \sin \theta + Fy \sin \alpha \sin \theta$$

$$= Fx \sin \alpha \cos \theta - 2Fx \cos \alpha \sin \theta + Fy \sin \alpha \sin \theta$$

$$\text{Right side denominator} = Fx \cos \alpha \cos \theta - Fy \sin \alpha \cos \theta + Fy \sin \alpha \cos \theta - Fy \cos \alpha \sin \theta$$

$$= Fx \cos \alpha \cos \theta - Fy \cos \alpha \sin \theta$$

, and hence the following are obtained:

$$\tan \beta = (Fx \sin \alpha \cos \theta - 2Fx \cos \alpha \sin \theta + Fy \sin \alpha \sin \theta) / ((Fx \cos \theta - Fy \sin \theta) \cos \alpha) \quad \text{Formula 9}$$

$$\beta = \tan - 1 ((Fx \sin \alpha \cos \theta - 2Fx \cos \alpha \sin \theta + Fy \sin \alpha \sin \theta) / ((Fx \cos \theta - Fy \sin \theta) \cos \alpha)) \quad \text{Formula 10}$$

Relational Formula 1, and Formula 9 and Formula 10 which were derived from Relational Formula 1 shows the relationship of thruster orientations $\alpha$ and $\beta$ when tilt orientation angle $\eta$ and tilt amount H of handlebar 11 are outputted from maneuvering device 9 by means of operation by the operator, to give traversing component Fx (refer to above Formula 1) and forward-reverse moving component Fy (refer to above Formula 2) of the thrust of hull 7.

Moreover, from Formula 3 and Formula 4:

$$Tl = (Fy - Tr \cos \beta) / \cos \alpha$$

$$Tl = (Fx - Tr \sin \beta) / \sin \alpha$$

and cancelling out Tl gives:

$$(Fy - Tr \cos \beta) / \cos \alpha = (Fx - Tr \sin \beta) / \sin \alpha$$

and cross multiplying the numerator and denominator gives:

$$(Fx - Tr \sin \beta) \cos \alpha = (Fy - Tr \cos \beta) \sin \alpha$$

$$\Rightarrow Fx \cos \alpha - Tr \sin \beta \cos \alpha = Fy \sin \alpha - Tr \cos \beta \sin \alpha$$

$$\Rightarrow Tr \sin \alpha \cos \beta - Tr \cos \alpha \sin \beta = Fy \sin \alpha - Fx \cos \alpha$$

Accordingly, starboard thruster thrust Tr is given by:

$$Tr = (Fy \sin \alpha - Fx \cos \alpha) / \sin (\alpha - \beta) \quad \ldots \quad \text{Formula 11}$$

Similarly, from Formula 3 and Formula 4,

$$Tr = (Fy - Tl \cos \alpha) / \cos \beta$$

$$Tr = (Fx - Tl \sin \alpha) / \sin \beta$$

. Cancelling out Tr gives:

$$(Fy - Tl \cos \alpha) / \cos \beta = (Fx - Tl \sin \alpha) / \sin \beta$$

and cross multiplying the numerator and denominator gives:

$$(Fy - Tl \cos \alpha) \sin \beta = (Fx - Tl \sin \alpha) \cos \beta$$

$$\Rightarrow Fy \sin \beta - Tl \cos \alpha \sin \beta = Fx \cos \beta - Tl \sin \alpha \cos \beta$$

$$\Rightarrow Tl \sin \alpha \cos \beta - Tl \cos \alpha \sin \beta = Fx \cos \beta - Fy \sin \beta$$

, and the port thruster thrust Tl is given by:

$$Tl = (Fx \cos \beta - Fy \sin \beta) / \sin (\alpha - \beta) \quad \ldots \quad \text{Formula 12}$$

By the above logic, since $\theta$ in the hull 7 is already known, if tilt orientation angle $\eta$ and tilt amount H are given by operation of maneuvering device 9, the control device 8 can calculate the relationship between the thruster orientations $\alpha$, $\beta$ and thruster thrusts Tr, Tl of a pair of azimuth thrusters 10, 10.

Moreover, if Formula 1 and Formula 2 are substituted in Formula 9,

$$\tan \beta = (H \sin \eta \sin \alpha \cos \theta - 2H \sin \eta \cos \alpha \sin \theta + H \cos \eta \sin \alpha \sin \theta) / \{(H \sin \eta \cos \theta - H \cos \eta \sin \theta) \cos \alpha\}$$

and cancelling out H in the denominator and numerator gives:

$$\tan \beta = (\sin \eta \sin \alpha \cos \theta - 2 \sin \eta \cos \alpha \sin \theta + \cos \eta \sin \alpha \sin \theta) / \{(\sin \eta \cos \theta - \cos \eta \sin \theta) \cos \alpha\}$$

. This means the relationship of $\alpha$ and $\beta$ does not depend on tilt amount H.

Moreover, Formulae 11 and 12 similarly give:

$$Tr = H (\cos \eta \sin \alpha - \sin \eta \cos \alpha) / \sin (\alpha - \beta)$$

$$Tl = H (\sin \eta \cos \beta - \cos \eta \sin \beta) / \sin (\alpha - \beta)$$

, and the thruster thrusts Tr, Tl are proportional to tilt amount H.

Fig. 12 shows graphs of Relational Formula 1 (or Formula 9 or Formula 10) illustrating the relationship between the traversing component Fx and forward-reverse moving component Fy of the target thrusts, and the thruster orientations $\alpha$ and $\beta$ of a pair of azimuth thrusters 10, 10, given by tilt orientation angle $\eta$ which is a first maneuvering quantity and tilt amount H which is a second maneuvering quantity, which are outputted by the maneuvering device 9 during movement of hull 7. When plotted on a graph, an angle $\theta$ which is a fixed value determined from the structure and equipment of a boat is configured as 10° as one example, a tilt amount H which is a second maneuvering quantity is configured as 1, and a tilt orientation angle $\eta$ which is a first maneuvering quantity is configured as 0°, 5°, 15°, 45°, 90°, 135° in Graphs 1 to 6. Furthermore, the thruster orientations $\alpha$ and $\beta$ given by these graphs and the thruster thrusts Tl and Tr of a pair of azimuth thrusters 10, 10 calculated from above Formulae 11 and 12 are superimposed and displayed in the above graphs.

Fig. 13 is a graph similar to that of Fig. 12, where the tilt orientation angle $\eta$ which is a first maneuvering quantity is configured as 165°, 175°, 180°, -135°, -90°, -45° in Graphs 7 to 12. Other conditions are similar to those of Fig. 11.

From Relational Formula 1, above Formulae 11 and 12, and furthermore from the graphs of Fig. 12 and Fig. 13 which visualize these formulae, if angle $\theta$ illustrating an arrangement of a pair of azimuth thrusters 10, 10 of hull 7 which is a fixed value, and tilt amount H and tilt orientation angle $\eta$ outputted when operating maneuvering device 9 are given, it is understood that there exists a large number of combinations of thruster orientations $\alpha$, $\beta$ and thruster thrusts Tl, Tr of a pair of azimuth thrusters 10, 10 which can provide a desired target thrust to hull 7. For example, the graph of the upper left of Fig. 12 has a tilt orientation angle of $\eta$ = 0°, and is a case in which the hull is made to perform translational movement in the forward straight advancing direction. The thruster orientation $\alpha$ is expressed by the right ascending straight line, and the thruster orientation $\beta$ is expressed by the right descending straight line. Although the thruster thrusts Tl, Tr corresponding to these thruster orientations are expressed by the dashed lines, both are matching and overlap at tilt orientation angle $\eta$ = 0°. If the thruster orientation $\alpha$ was made to change from -180° to 180° (horizontal axis), the corresponding thruster orientation $\beta$ changes from 180° to -180° (right vertical axis). This means that the left and right thruster orientations become symmetrically positioned. Although the thruster orientation $\alpha$ is shown continuously from -180° to 180° in the graph, the size of thruster thrusts Tl, Tr (left vertical axis) in a thruster orientation $\alpha$ in the vicinity of -90°, 90° greatly increases and hence is inefficient. Moreover, the thruster thrusts Tl, Tr become negative (minus) in a region of the thruster orientation $\alpha$ being $\alpha$ < -90° and 90 < $\alpha$. This is a state in which the propellers are made to rotate in reverse after configuring the thruster orientations in the reverse movement direction, which is not a reasonable combination with azimuth thrusters driven by an engine. Accordingly, a combination of thruster orientations $\alpha$, $\beta$ and thruster thrusts Tl, Tr can be realistically selected in a range of which the thruster orientation $\alpha$ is about -80° to 80°. Although the explanation for the remaining graphs of Fig. 12 is omitted here, the thruster thrusts Tl, Tr are shown by other dashed lines without superimposing. Accordingly, it can be understood that there exists a large number of combinations of thruster orientations $\alpha$, $\beta$ and thruster thrusts Tl, Tr of a pair of azimuth thrusters 10, 10 which can provide desired target thrust to hull 7, in a practically and reasonably selectable range. From amongst these combinations, the control device 8 selects combinations of optimal thruster orientations $\alpha$, $\beta$ and thruster thrusts Tl, Tr in order for a pair of azimuth thrusters 10, 10 to provide target thrust to hull 7, by means of the First Control Technique to the Fourth Control Technique explained below.

In the translational movement mode, when the route/speed of hull 7 needs to be changed and handlebar 11 is moved, each of azimuth thrusters 10, 10 shifts from the present state ($\alpha$1, $\beta$1, Tl1, Tr1) to the next state ($\alpha$2, $\beta$2, Tl2, Tr2), and in that case, it is considered that this is efficient and smooth navigation to the extent that the amount of change of thruster orientations $\alpha$, $\beta$ and thruster thrusts Tl, Tr is as small as possible. Namely, it is advisable to select $\alpha$2, $\beta$2, Tl2, Tr2 of which the values of $|\alpha 2 - \alpha 1|$, $|\beta 2 - \beta 1|$, $|Tl2 - Tl1|$, $|Tr2 - Tr1|$ become the smallest.

1) First Control Technique

In the ship maneuvering system 1 of the present embodiment, because in a stop state where handlebar 11 is not tilted, a pair of azimuth thrusters 10, 10 is in the "neutral stop" state shown in Fig. 10, this state is given to control device 8 as an initial value ($\alpha$1 = 90°, $\beta$1 = -90°, Tl1 = Tr1 = Tmin). Control device 8 then first calculates the relationship of thruster orientations $\alpha$2, $\beta$2 and thruster thrusts Tl2,Tr2 by means of Relational Formula 1 etc., from the tilt orientation angle $\eta$ and tilt amount H when handlebar 11 is moved, and from amongst a large number of obtained combinations, selects a combination of $\alpha$2, $\beta$2, Tl2,Tr2 such that the larger of the values of $|\alpha 2 - \alpha 1|$ and $|\beta 2 - \beta 1|$ becomes the minimum. Whenever handlebar 11 is moved afterwards, control device 8 can perform smooth navigation with good efficiency by repeatedly implementing this action.

However, amongst the combinations of $\alpha$2, $\beta$2, Tl2, Tr2, if Tl2 and Tr2 are zero or a minus value, or if the combination includes an extremely large value etc., these cannot be said to be realistic selections. Thus, realistic maximum values; that is, limited values, are provided from the thruster thrusts produced by azimuth thrusters 10; that is, the rated value of propeller rotation or rated output of the engine etc., and a combination is selected in the range thereof. Specifically, control device 8 is configured to select a combination such that the thruster thrusts are not less than zero and not more than the maximum thrust of azimuth thrusters 10. This also applies to the Second Control Technique and the Third Control Technique mentioned below.

Fig. 14 are drawings for explaining a technique for control device 8 to calculate and select a combination of thruster orientations and thruster thrusts of a pair of azimuth thrusters 10, 10 which produce a target thrust, in the translational movement mode of ship maneuvering system 1 of the embodiment. When control device 8 selects an appropriate combination of thruster orientations and thruster thrusts of a pair of azimuth thrusters 10, 10 in Graph 2 shown in Fig. 12, Fig. 14A displays, in the graph at the boxes where diagonal lines were drawn, selectable regions in which a selectable combination exists, when the selection of a combination in which the thruster thrusts is not less than zero and is not more than the maximum thrust of azimuth thrusters 10 is configured as a condition.

Moreover, according to the First Control Technique, a combination is selected such that the larger of the values of thruster orientation differences $|\alpha2 - \alpha1|$ and $|\beta2 - \beta1|$ of before and after operation of maneuvering device 9 becomes the minimum, and hence the time required for rotation of azimuth thrusters 10 is the shortest. However, when selecting the thruster orientations, excluding the time necessary for the thrusters to rotate, there are cases where other elements need to be taken into consideration. For example, combinations where a pair of thrusters are mutually facing inward and water currents are mutually jetting into each other are preferably to avoided from the mechanical impact aspect and efficiency aspect. In the selectable range excluding this case, by selecting one combination of which the thruster orientation differences $|\alpha2 - \alpha1|$ and $|\beta2 - \beta1|$ of before and after operation of maneuvering device 9 becomes smaller, failure of azimuth thrusters 10 as well as fuel consumption amount can be suppressed.

2) Second Control Technique

Although $\alpha2$, $\beta2$, Tl2,Tr2 selected by the First Control Technique is a combination of which the change of thruster orientations is made to be the minimum, it is not a combination of minimizing the change of the thruster thrusts. Therefore, even if the change of thruster orientations is at minimum, it takes time for a change of the thruster thrusts, and there are cases where much time and motive force is necessary to change the route or speed of the hull. Thus, in the Second Control Technique, a judgement is made to include not only the thruster orientation differences $|\alpha2 - \alpha1|$ and $|\beta2 - \beta1|$ of the present state and of after operation of a maneuvering device, but to also include the thruster thrust differences |Tl2 - Tl1| and |Tr2 - Tr1| of the present state and of after operation of a maneuvering device. Namely, by selecting a combination of thruster orientations such that the largest of $|\alpha2 - \alpha1|$, $|\beta2 - \beta1|$, |Tl2 - Tl1|, |Tr2 - Tr1| becomes the minimum, smooth and efficient maneuvering can be performed.

The thruster orientations and thruster thrusts cannot be determined by a simple comparison of which of the four values has the largest difference before and after operation (amount of change), because the units are different. Thus, the difference of before and after operation of each value is expressed as a ratio (percent) based on the maximum value of each value, and a combination of thruster orientations is selected such that the value expressed by such ratio (percent) becomes the minimum. Namely, the minimum value of the thruster thrusts is configured as 0%, and the maximum value is configured as 100%, and the amount of thruster thrust Tl and thruster thrust Tr which should be changed is calculated in percent. Based on 0 to 180° which is the changeable range for the thruster orientation, the angle of thruster orientation $\alpha$ or thruster orientation $\beta$ which should be changed is calculated in percent based on 180°. Then, the thruster thrusts are compared, by percent, with the amount of change of the thruster orientations, and a combination of thruster orientations is selected such that the maximum value thereof becomes the minimum.

3) Third Control Technique

The combination of $\alpha$, $\beta$ selected by the Second Control Technique is a combination of which the change of the thruster orientations and the thruster thrusts is made to be the minimum. However, because the time from the present state until attaining the thruster orientations and thruster thrusts after operation ($\alpha2$, $\beta2$, Tl2,Tr2) depends on the speed increase/decrease capability of the propeller rotation speed and nozzle turning capability, the combination of $\alpha$, $\beta$ selected by the Second Control Technique is not a combination of which the attainment time is the shortest. Thus, the Third Control Technique is configured so that a combination of thruster orientations is selected such that, from amongst the times from the present state of the maneuvering device until attaining the thruster orientations and thruster thrusts after operation; namely, from amongst the estimated attainment times until attaining the target, the largest time becomes the minimum, and thereby smooth maneuvering is performed.

These estimated times are obtainable from design data, test data, control parameters etc. such as of an engine, azimuth thruster, propeller etc. For example, for a combination of $\alpha$, $\beta$, Combination 1 and Combination 2 are configured to be selectable. If the time required for attaining the thruster orientations and thruster thrusts after operation ($\alpha 2$, $\beta 2$, Tl2, Tr2) is configured as 30 seconds, 45 seconds, 60 seconds, 20 seconds in the case of Combination 1, the maximum value of estimated attainment time is 60 seconds for thruster thrust Tl. Meanwhile, if this is respectively configured as 20 seconds, 45 seconds, 30 seconds, 20 seconds for the case of Combination 2, the maximum value is 45 seconds of thruster orientation $\beta$, which is selected as the maximum value of Combination 2, as this is smaller when comparing 60 seconds and 45 seconds. This example, was configured with two selectable combinations; however, if the number of combinations increases, a combination which includes the minimum value is selected.

4) Fourth Control Technique

Although the $\alpha 2$, $\beta 2$, Tl2,Tr2 selected by the First Control Technique is a combination in which a change of thruster orientations is made to be a minimum, when a voyage takes place exceeding a prescribed time in the state that a target thrust is produced at hull 7 by means of this combination,, if considering the fuel consumption amount, it is considered to be preferable to select a combination of which the total of thruster thrust Tl2 and thruster thrust Tr2 becomes the minimum. Thus, in the control device 8 of the embodiment, if control takes place by the First Control Technique immediately after the position of handlebar 11 was changed, and a prescribed time is exceeded with no change in the position of handlebar 11, a Fourth Control Technique may also be taken, where in this technique, the combination is gradually shifted to a combination of thruster orientations $\alpha 2$ and $\beta 2$ and thruster thrusts Tl2 and Tr2 of which the total of thruster thrust Tl2 and thruster thrust Tr2 becomes the minimum.

Fig. 14B is a partially expanded view of a portion of the selectable regions of Fig. 14A, illustrating selection point A showing the originally selected value of the thruster thrusts of a pair of azimuth thrusters 10, 10, and selection point B in which the total of the thruster thrusts of a pair of azimuth thrusters 10, 10 is smaller. According to the aforementioned First Control Technique, control device 8 selects selection point A by a combination such that the larger of the thruster orientation differences $|\alpha 2 - \alpha 1|$ and $|\beta 2 - \beta 1|$ of before and after operation of maneuvering device 9 becomes the minimum. However, if afterwards there is no change in the position of handlebar 11 over a prescribed time, control is performed for voyaging to take place by shifting to selection point B of which the total of the thruster thrusts of a pair of azimuth thrusters 10, 10 is smaller. Thereby, compared to the case in which only the First Control Technique was performed, fuel consumption amount can be suppressed to an even lower amount.

5) Fifth Control Technique

In the Second Control Technique, a combination of thruster orientations is selected based on the values of thruster orientation differences $|\alpha 2 - \alpha 1|$ and $|\beta 2 - \beta 1|$ of the present state and of after operation of a maneuvering device and thruster thrust differences |Tl2 - Tl1| and |Tr2 - Tr1| of the present state and of after operation of a maneuvering device. However, in the Fifth Control Technique, a combination of thruster orientations $\alpha$, $\beta$ and thruster thrusts Tl, Tr is selected by configuring a combination of left-right symmetrical thruster orientations and thruster thrusts when performing forward-reverse movement in the cruising mode mentioned above, as a reference.

When tilt orientation angle $\eta$ which is a first maneuvering quantity and tilt amount H which is a second maneuvering quantity are outputted from maneuvering device 9, as explained in Fig. 2, the hull performs a control similar to that when performing straight advancing forward movement in cruising mode, and by configuring the thruster orientation $\alpha$ = 90°, $\beta$ = -90° as the initial value, and increasing/decreasing the forward movement component of the thruster orientations and the thruster thrusts according to the increase/decrease of tilt amount H, a left-right symmetrical reference value of the thruster orientations and thruster thrusts of a pair of azimuth thrusters is calculated. Namely, the thruster orientations, as the reference value obtained from this tilt amount H, are respectively configured as $\alpha 0$, $\beta 0$, and the thruster thrusts, similarly as the reference value, are configured as Tl0, Tr0. Then, calculation is respectively performed on: a value of thruster orientation difference $|\alpha 2 - \alpha 0|$, which is a difference of reference value $\alpha 0$ and the thruster orientation $\alpha 2$ after operating a maneuvering device; a value of thruster orientation difference $|\beta 2 - \beta 0|$, which is a difference of reference value $\beta 0$ and the thruster orientation $\beta 2$ after operating the maneuvering device; a value of thruster thrust difference |Tl2 - Tl0|, which is a difference of reference value Tl0 and the thruster thrust Tl2 after operating the maneuvering device; and a value of thruster thrust difference |Tr2 - Tr0|, which is a difference of reference value Tr0 and the thruster thrust Tr2 after operating the maneuvering device. Then, amongst these, a combination of thruster orientations $\alpha$ and $\beta$ is selected, as a ratio, such that the largest of these becomes the minimum. In such a case, the selection of a combination of thruster orientations $\alpha$ and $\beta$ does not depend on the progress of navigation, there is reproducibility in selections, and the action of a ship maneuvering system becomes stable.

Tl and Tr are calculated by substituting $\alpha$ and $\beta$ selected by the aforementioned control techniques in Formula 11 and Formula 12, and by changing to a combination of such thruster orientations and thruster thrusts, the target thrust can be produced at hull 7 to be able to move in any direction. The thruster thrust Tl at port and thruster thrust Tr at starboard are computed from the combination of the selected thruster orientation $\alpha$ at port and thruster orientation $\beta$ at

starboard, and by controlling four types of actions in a pair of azimuth thrusters, the amount of change of the thruster orientations and the thruster thrusts can be suppressed to the minimum, and quick and smooth navigation can be achieved.

Here, in the calculation of the aforementioned $\alpha$, $\beta$, Tl, Tr in the translational movement mode, the target thrust intended to be produced at the hull is configured to be constant for all directions in 360°. That is, when handlebar 11 was brought down to the maximum position, for any orientation of which tilt orientation angle $\eta$ is -180° to 180°, the tilt amount H of handlebar is equal to maximum value (= 1), and thereby the target thrust intended to be produced at the hull also becomes equal for all directions in 360°. In the case of the ship of the Example, the thrust for the forward-reverse moving direction is easily produced at the hull to easily produce speed, whereas the thrust for traversing direction is difficult to produce at the hull and it is thus also difficult to produce speed, because the ratio in which a portion of the thrust between the left and right azimuth thrusters cancel each other out becomes large. Because there is an upper limit for thrusts Tl, Tr which the left and right azimuth thrusters can produce, in the aforementioned translational movement mode control, the maximum value of the target thrust intended to be produced at the hull is aligned with the value that can be produced even if it is a traversing direction with poor efficiency. The relationship between the tilt amount H of handlebar and the target thrust produced at the hull is made to be the same, even based on any direction of 360°. Thus, while thrusts Tl, Tr produced by the left and right azimuth thrusters reach the upper limit in the traversing direction, there is allowance for thrusts Tl, Tr to be produced in the forward movement and reverse movement direction.

Thus, as one of the selective methods, the tilt amount H of handlebar 11 outputted from maneuvering device 9 is converted to a rectified tilt amount H' in control device 8 according to tilt orientation angle $\eta$ of the handlebar, according to the below formula.

$$H' = f(\eta) \times H$$

where, f ($\eta$) is an approximation formula of the thrust which can be produced according to tilt orientation angle $\eta$, and is obtainable by approximation by numerical value computation or experimentation. The value for the direction nearer to the forward movement and reverse movement becomes larger, and the value for the traversing direction becomes small. For example, in one example of a computation in the case of $\theta$ = 10° in the Example, if the value of f ($\eta$) at a traversing direction of ($\eta$ = 90°) is configured to be 1, the value of f ($\eta$) at a forward movement direction of ($\eta$ = 0°) becomes about 5. Thereby, even in the translational movement mode, thruster thrusts Tl, Tr in the tilt orientation angle $\eta$ near the forward movement direction or reverse movement direction can be produced to near the upper limit, thus enabling voyaging to take place to near the highest speed. Moreover, there is no need to switch from translational movement mode to cruising mode, and thus seamless maneuvering sensation is obtainable.

(V) Translational movement mode and orientation correction

When voyaging takes place in the translational movement mode, there are cases where the hull orientation changes due to a disturbance such as fluid force or wind, and where the hull cannot be arbitrarily moved. Thus, a control technique of orientation correction of the hull 7 in the translational movement mode is explained referring to Fig. 15 and Fig. 11.

As a control technique of orientation correction, a manually operated correction by means of operation of handlebar 11 by the operator (hereinunder, configured as manual operation feedback control) is utilized. Specifically, an operation is performed of rotating the gripping portion 12 of handlebar 11 of maneuvering device 9 to a desired direction as shown by the arrow in Fig. 15. In the illustrated example, this is rotated in the leftward direction. A third maneuvering quantity instructing the steering angle Z of handlebar 11 is outputted from maneuvering device 9 by this operation, and control device 8 having received this controls azimuth thrusters 10 to produce a swing component M to hull 7, and to return the hull orientation to the direction in which handlebar 11 was made to rotate, as explained below.

$$Tl \sin(\alpha - \theta) + Tr \sin(\beta + \theta) = 0 \qquad \ldots \qquad \text{Formula 5}$$

In the aforementioned Formula 5 explained referring to Fig. 11, two swing components M for performing translational movement on hull 7 (Ml, Mr of Fig. 11B) cancelling each other out is configured as a condition, where the right side has become zero. However, because a swing component M is necessary when performing orientation correction of hull 7, the right side of Formula 5 is not zero, but is a swing component M of a prescribed value. Namely, this is:

$$Tl \sin(\alpha - \theta) + Tr \sin(\beta + \theta) = M \qquad \ldots \qquad \text{Formula 13}$$

As shown in Fig. 11B, when hull 7 is in translational movement, two swing components keep an equilibrium by mutually cancelling each other out; however, if the orientation or thrust of either of the port and starboard azimuth thrusters 10 are made to be changed, such equilibrium is destroyed, and a swing component is produced which will rotate hull 7. The size of the rotation component in such a case is: Port:

$$Tl \sin(\alpha - \theta)$$

Starboard:

$$Tr \sin(\beta + \theta)$$

; however, in order for a swing component to be produced at hull 7, in regards to which item is chosen and to be changed, from amongst four items of Tl, Tr, $\alpha$, $\beta$ which are the present thruster orientations and thruster thrusts of a pair of azimuth thrusters 10, 10, when a value thereof was made to be changed, it is preferable to choose that which can most effectively change the aforementioned swing component.

Thus, the control device 8 of ship maneuvering system 1 can be configured to utilize a means of selecting the thruster orientations $\alpha$ and $\beta$, and the thruster thrust Tl and Tr, as a correction means of the hull orientation in the translational movement mode, with a condition of adding the swing component M.

If the swing component M is added, as mentioned above, the right side of Formula 5 is not zero, but is a swing component M of prescribed value, as in Formula 13.

According to Formula 3:

$$Tr = (Fy - Tl \cos\alpha) / \cos\beta$$

, and substituting this in Formula 13 gives:

$$Tl \sin(\alpha - \theta) + \{(Fy - Tl \cos\alpha) / \cos\beta\} * \sin(\beta + \theta) = M$$

$$\Rightarrow Tl \sin(\alpha - \theta) = \{(Tl \cos\alpha - Fy) / \cos\beta\} * \sin(\beta + \theta) + M$$

$$= \{(Tl \cos\alpha - Fy) / \cos\beta\} * (\sin\beta \cos\theta + \cos\beta \sin\theta) + M$$

$$= (Tl \cos\alpha - Fy) * (\tan\beta \cos\theta + \sin\theta) + M$$

$$= Tl \cos\alpha (\tan\beta \cos\theta + \sin\theta) - Fy (\tan\beta \cos\theta + \sin\theta) + M$$

$$\Rightarrow Tl \{\sin(\alpha - \theta) - \cos\alpha (\tan\beta \cos\theta + \sin\theta)\} = - Fy (\tan\beta \cos\theta + \sin\theta) + M$$

$$\Rightarrow Tl = \{- Fy (\tan\beta \cos\theta + \sin\theta) + M\} / \{\sin(\alpha - \theta) - \cos\alpha (\tan\beta \cos\theta + \sin\theta)\} \quad \ldots \quad \text{Formula 14}$$

According to Formula 4,

$$Tr = (Fx - Tl \sin\alpha) / \sin\beta$$

, and substituting this in Formula 13 gives:

$$Tl \sin(\alpha - \theta) + \{(Fx - Tl \sin\alpha) / \sin\beta\} * \sin(\beta + \theta) = M$$

$$=> Tl \sin(\alpha - \theta) = \{(Tl \sin\alpha - Fx) / \sin\beta\} * \sin(\beta + \theta) + M$$

$$= \{(Tl \sin\alpha - Fx) / \sin\beta\} * (\sin\beta \cos\theta + \cos\beta \sin\theta) + M$$

$$= (Tl \sin\alpha - Fx) * (\cos\theta + \sin\theta / \tan\beta) + M$$

$$= Tl \sin\alpha (\cos\theta + \sin\theta / \tan\beta) - Fx (\cos\theta + \sin\theta / \tan\beta) + M$$

$$=> Tl \{\sin(\alpha - \theta) - \sin\alpha (\cos\theta + \sin\theta / \tan\beta)\} = - Fx (\cos\theta + \sin\theta / \tan\beta) + M$$

$$=> Tl = \{- Fx (\cos\theta + \sin\theta / \tan\beta) + M\} / \{\sin(\alpha - \theta) - \sin\alpha (\cos\theta + \sin\theta / \tan\beta)\} \quad \ldots \quad \text{Formula 15}$$

According to Formulae 14 and 15, Tl is cancelled out to give:

$$\{- Fy(\tan\beta \cos\theta + \sin\theta) + M\} / \{\sin(\alpha - \theta) - \cos\alpha (\tan\beta \cos\theta + \sin\theta)\} = \{- Fx (\cos\theta + \sin\theta) / \tan\beta) + M\} / \{\sin(\alpha - \theta) - \sin\alpha (\cos\theta) + \sin\theta / \tan\beta)\} \quad \text{Relation Formula 2}$$

Accordingly, Relational Formula 2 of which swing component M was added, is obtained. The aforementioned Second Control Technique is utilized as a control technique to select thruster orientations and thruster thrusts from Relational Formula 2. By determining a swing component, and utilizing Relational Formula 2 and the Second Control Technique, the control device 8 can obtain the required $\alpha$, $\beta$, Tl, Tr for performing translational movement on the hull, whilst suppressing swing component produced due to a disturbance such as fluid force or wind. Moreover, if in Relational Formula 2 the swing component is transformed into zero, this will match with Relational Formula 1. Moreover, as the selected control technique of thruster orientations and thruster thrusts, the First and Third Control Techniques are also applicable.

According to the aforementioned means, although hull orientation can be corrected whilst performing translational movement, if a disturbance such as fluid force or wind acting on hull 7 is large, the necessary swing component will also become correspondingly large. If the swing component is large, there are cases where, in order to balance both translational movement and hull correction, the required thruster thrusts would exceed the maximum thrust of the azimuth thrusters. As a Countermeasure 1 for this, the target thrust of a hull determined according to the first maneuvering quantity and the second maneuvering quantity is reduced, and the thrust distributed to the swing component is increased. By calculating a combination of thruster orientations and thruster thrusts from Relational Formula 2 utilizing the reduced target thrust, a combination of which the thruster thrusts are not more than the maximum thrust can be calculated.

The aforementioned Countermeasure 1 is a method of distributing a portion of the thrust which should actually be expended in the translational movement to a swing component, whilst keeping the translational movement direction. However, even if target thrust is reduced to near zero, the state as shown in Fig. 16A is the limit, and there are cases where the necessary swing component cannot be sufficiently produced. Thus, Countermeasure 2 is taken, in which translational movement was temporarily sacrificed. For example, the thruster orientation $\alpha$ at port and thruster orientation $\beta$ at starboard are respectively changed to 90° + $\theta$ and -90° - $\theta$; namely, respectively changed to an angle perpendicular to $\theta$, which is an angle in which the swing component becomes larger, as in Fig. 16B. Next, the thruster thrust at port when the hull orientation is corrected to the left, and the thruster thrust at starboard when the hull orientation is corrected to the right, are respectively outputted according to the size of the swing component, and the thruster thrust of the side which does not contribute to hull correction is configured as zero. Because one thrust of the thruster is utilized in all swing components, even if a large disturbance such as fluid force or wind acts upon hull 7, hull orientation can be corrected. However, because the translational movement instructed by the operator stops when Countermeasure 2 is performed, if the thruster thrusts calculated by Countermeasure 1 become the maximum thrust or under, the translational movement immediately returns to Countermeasure 1. Even in the case of over-correction, the other azimuth is also set to the angle at which the swing component of the opposite direction becomes the maximum, and thus rectification is easily performed by driving this.

Propeller 3 is provided inside a cylindrical nozzle with a cross section having a blade profile parallel to the water current direction (called a "colt nozzle") such as in the thrusters shown schematically in Fig. 1, and there are cases where the colt nozzle produces lifting force by the water current to increase propeller efficiency. In the aforementioned Countermeasure 2, only one of the thrusters was driven to align with the orientation of hull correction, and the other thruster thrust was configured as zero. In this way, even if the thrust is zero, and a thruster does not produce thrust, if a thruster has the colt nozzle mentioned above, there are cases where propulsion force is obtained from the water current only by movement of the hull, to produce thrust at the hull. Namely, it is considered to be a case where the colt nozzle of a thruster acts as a rudder, the influence of which causes the hull to move unexpectedly. Thus, as one objective also to prevent this, with Countermeasure 2, the angle of the thruster of which the thrust is zero is not left to be in an arbitrary state, but the swing component is changed to become the maximum angle, thereby preventing unexpected movement of the hull.

(VI) Developmental technique of orientation correction

The aforementioned correction technique is a technique of correction by performing an operation of handlebar 11 so as to cancel out the change of hull orientation which was visually confirmed by the operator, and is a manual operation feedback control performed via the operator. With this control, because sensing of the present direction and correction control action are controlled by manpower, there are cases where accuracy and quickness are lost.

Thus, as another technique, there is orientation angle control. From nautical instruments equipped at the hull, the hull orientation information is periodically acquired via communication etc., and by configuring the hull orientation when a third maneuvering quantity was zero as a target hull orientation, the orientation angle deviation between the actual hull orientation and the target hull orientation is calculated, the value of swing component M is determined such that the orientation angle deviation thereof becomes zero, and orientation angle control is performed. Moreover, in the target hull orientation, if the navigation mode was switched from cruising mode to translational movement mode, the hull orientation at the point in time of having been switched may also be configured as the target hull orientation.

Furthermore, orientation angle control may also be used in combination with manual operation feedback control. The manual operation feedback control has a high order of priority of correction when combining these, and if a third maneuvering quantity was inputted by an operator, the swing component M which achieves this is made to be produced, thereby correcting the hull orientation. If no third maneuvering quantity was inputted, the swing component M is made to be produced with orientation angle control. The manually operated correction by means of manual operation feedback control can be combined similarly to that of another technique mentioned below, and by combining the manually operated correction by the operator and the automatic correction, the time until the hull orientation is corrected can be shortened, whilst correcting hull orientation according to the intention of the operator.

Even if controlling thruster orientations and thruster thrusts so that the orientation angle deviation is made to be zero, the correction action may also be slow and take time for convergence. Thus, PD control may also be utilized as another technique. An orientation angle deviation is calculated by configuring the hull orientation when a third maneuvering quantity was made to be zero, as a target hull orientation. Then, a swing component M is configured as a value obtained by adding a value obtained by multiplying the orientation angle deviation with a coefficient, to a value obtained by multiplying a value of which the orientation angle deviation was time differentiated with a coefficient. This is the PD control of which a change component of orientation angle was added, and compared to the simple orientation angle control (P control), the orientation angle change can be predicted and quick orientation correction can take place, by also controlling the swing angular velocity which is a differential component of hull orientation (D control).

The orientation angle PD control is a technique for predicting an orientation angle change because the swing component M becomes large to the extent that orientation angle deviation is large; however, because the swing component M is not determined such that orientation angle deviation is made to be zero, there are also cases where a hull orientation does not become a very good target value. Thus, cascade control may also be utilized as another control technique, where the cascade control combined an angular velocity feedback with an orientation angle control, and where the angular velocity feedback configures a value obtained by multiplying an orientation angle deviation with a coefficient, as a target angular velocity.

With cascade control, firstly, an orientation angle deviation is calculated by configuring a hull orientation when a third maneuvering quantity became zero, as target hull orientation. A swing angular velocity measured with a measuring device is subtracted from the value obtained by multiplying this orientation angle deviation with a coefficient. Then, a value obtained by multiplying the difference obtained by this subtraction with a coefficient is configured as a swing component M. Namely, the swing component M is determined to be large to the extent that the orientation angle deviation and swing angular velocity are large, and the swing component M is determined to be small to the extent that the orientation angle deviation and swing angular velocity are small. The influence that the orientation angle deviation imparts to swing angular velocity differs depending on the hull, and thus the multiplying of a deviation with a coefficient during control is for adjusting this difference. By manually operated correction by the operator, as well as by performing cascade control of hull orientation and swing angular velocity, the swing angular velocity can become small, whilst the hull's orientation approaches the target hull orientation.

With the aforementioned cascade control, although the swing angular velocity was measured with a measuring device and utilized, if there is a hull orientation detection function but no swing angular velocity detection function in the nautical instruments mounted at the hull, the swing angular velocity information can be utilized by performing time differentiation on the hull orientation information. If this method is utilized, the orientation angle PD control and cascade control can be implemented even if a swing angular velocity information is not acquired from measuring instruments.

As another technique, a swing angular velocity feedback control determining a value of a swing component M may be utilized, such that swing angular velocity information or swing angle acceleration of the hull is acquired from measuring instruments mounted at the hull, and this is made to be zero.

Moreover, as another technique, when thruster orientations are near 90° + $\theta$ or -90° - $\theta$, which are the directions of two swing components Ml, Mr shown in Fig. 11B, the thruster thrust Tl or Tr nearer thereto may be configured to be changed, and if far, the thruster orientation $\alpha$ or $\beta$ may also be configured to be changed. This judgement of "far" or "near" is configured to be judged by adopting a threshold value empirically and experimentally obtained beforehand, and is changeable by means of control device 8.

Then, when changing thruster thrust Tl or thruster thrust Tr, the maximum value of the thruster thrusts is configured to be 100%, the amount of thruster thrust Tl and thruster thrust Tr which should be changed is calculated in percent, and the thruster thrusts with the smaller amount of change is adopted. When changing thruster orientation $\alpha$ or thruster orientation $\beta$, based on 180° which is the range of change in which thruster orientation is possible, the angle to which thruster orientation $\alpha$ or thruster orientation $\beta$ should be changed is calculated, in percent, based on 180°, and the thruster orientations having the smaller amount of change is adopted. Alternatively, both the thruster thrusts and thruster orientations of the smaller amount of change selected as mentioned above may also be made to change. If both the thruster thrusts and thruster orientations are made to change in this way, compared to the case where only the thruster orientations were made to change, the correction of the orientation of hull 7 can be made efficiently, and correction can be performed more quickly.

Furthermore, as another technique, manual operation feedback control, orientation angle control, and swing angular velocity feedback control may be combined. The order of priority is manual operation feedback control, swing angle acceleration feedback control, and orientation angle control, where priority becomes lower in this order. Normally, the swing component M is determined by using the swing angle acceleration feedback control, and if there is an output of a third maneuvering quantity, this is prioritized using manual operation feedback control. If the deviation of a technique with a high order of priority was converged, a correction technique with a low order of priority becomes effective. By such combination of correction techniques, a change of hull orientation due to a disturbance such as fluid force or wind can be suppressed to the minimum limit, and translational movement can be performed on a hull whilst keeping a desired direction of travel with minimally limited handlebar operation.

(VII) Other operation

When a hull is made to approach a target object and made to stop, such as in a berthing operation, a navigation technique referred to as a "counter-rudder" is required in order to reduce speed. For example, when berthing at a quay in a rightward direction of hull 7, and orientating the direction of travel of hull 7 to be parallel to the quay side, and then performing translational movement in the rightward direction towards the quay and approaching the quay, it is presumed that a repetitive navigation action takes place of steering the counter-rudder to return to the left, and if returned too much, returning it again to the right. Graph 13 of Fig. 17 is a graph illustrating the case when tilt orientation angle $\eta$ = -90°; namely, when advancing in the true rightward direction, and Graph 14 illustrates the case when tilt orientation angle $\eta$ = +90°; namely, when advancing in the true leftward direction. In both drawings, when steering a counter-rudder, compared to the going back and forth in the light grey area, there are fewer changes of thruster orientations in going back and forth in the dark grey areas. The same applies when Graph 15 of Fig. 17 (tilt orientation angle $\eta$ = -140°) and Graph 16 (tilt orientation angle $\eta$ = +40°) are compared. Thus, when intending to navigate with a counter-rudder action such as berthing, it is preferable to select a range where thruster orientation $\alpha$ is as close to 90° as possible, by means of an operation input such as a "berthing" switch separately provided beforehand. Conversely, when there is little need to steer the counter-rudder or when performing translational movement over a long period of time, such as during offshore operation, selecting the areas where the total of the thruster thrust Tl and Tr become the minimum (near the light grey area) by means of an operation input such as an "offshore" switch separately provided beforehand, results in excellent fuel efficiency.

(VIII) Remote maneuvering

In the ship maneuvering system 1 of the embodiment explained above, if a remote maneuvering device 15 is utilized instead of the manual operation of maneuvering device 9, hull 7 can be remotely maneuvered from a maneuvering base location provided outside hull 7.

Fig. 18 is a drawing for explaining the remote navigation in the translational movement mode of the ship maneuvering system of the embodiment.

As illustrated in Fig. 18A, the hull 7 explained above is presumed to be e.g. tugboats 21, 22. Tugboats 21, 22 are mainly utilized to push, with its bow, a large boat 100 such as a tanker which cannot move with detail in a narrow place, and lead the large boat 100 by e.g. towing with a rope, for safe docking and undocking. In Fig. 18A, a receiver of a remote maneuvering device is placed aboard tugboats 21, 22, and a transmitter of a remote maneuvering device for tugboats 21, 22 is placed aboard large boat 100. Fig. 18B is a schematic plan view of maneuvering devices 9a, 9b provided in a transmitter of a remote maneuvering device, where tugboat 21 can be maneuvered by maneuvering device 9a and tugboat 22 can be maneuvered by maneuvering device 9b. When desiring to move large boat 100 directly lower in Fig. 18A, a ship's mate or pilot etc. (who conventionally instructs tugboat actions verbally) riding aboard the large boat 100 pulls handlebars 11, 11 of maneuvering devices 9a, 9b provided in a transmitter of a remote maneuvering device towards oneself, thereby moving the left and right tugboats 21, 22 forward to move the large boat directly lower. Moreover, although the action of hull 7 with respect to the handlebar operation is in reverse to the explanation referring to Figs. 1 to 17, inputting -1 in a settable coefficient A by control device 8 can change the action direction of hull 7 with respect to the tilt orientation angle $\eta$ of handlebar 11.

Moreover, one maneuvering device 9 may also be provided in large boat 100 as shown in Fig. 18C, and a ship's mate of large boat 100 may maneuver tugboats 21, 22 and large boat 100 by operating this maneuvering device 9. By performing maneuvering by means of the maneuvering device 9, the control device mounted on large boat 100 calculates the target thrust which should be provided to the large boat and distributes this target thrust to the thrust of two tugboats 21, 22 and large boat 100. For example, if handlebar 11 is brought right diagonally downward down, the target thrust made to be produced in the downward direction is distributed by tugboats 21, 22, and the target thrust towards the rightward direction is made to be produced by moving the large boat forward, and thereby the large boat can be moved with a maneuvering sensation as if maneuvering large boat 100 itself.

Reference Signs List

1 ... Ship maneuvering system
2 ... Propeller shaft
3 ... Propeller
4 ... Motor
5 ... Engine
6 ... Output shaft
7 ... Hull
8 ... Control device
9 ... Maneuvering device
10 ... Azimuth thruster (thruster)
11 ... Handlebar of maneuvering device
12 ... Gripping portion of maneuvering device
15 ... Remote maneuvering device
16 ... Receiver of remote maneuvering device
17 ... Transmitter of remote maneuvering device
$\alpha$, $\beta$ ... Thruster orientations of azimuth thrusters
Tl, Tr ... Thruster thrusts of azimuth thrusters
$\eta$ ... Tilt orientation angle of handlebar of maneuvering device (first maneuvering quantity)
H ... Tilt amount of handlebar of maneuvering device (second maneuvering quantity)
Z ... Steering angle of handlebar of maneuvering device (third maneuvering quantity)
G ... Center of gravity of hull
CL ... Center line of hull

## Claims

1. A ship maneuvering system comprising:

   a pair of azimuth thrusters provided at a hull so as to be left-right symmetrical with respect to a center line of the hull;
   a maneuvering device for outputting a first maneuvering quantity instructing a direction of travel of a hull and a second maneuvering quantity instructing a propulsion force of a hull; and
   a control device to control said azimuth thrusters by operation of said maneuvering device, wherein
   said control device comprises a translational movement mode for controlling said azimuth thrusters so that a hull moves translationally,
   said control device determines a target thrust of a hull according to said first maneuvering quantity and said second maneuvering quantity of said maneuvering device in said translational movement mode, and
   calculates and selects a combination of thruster orientation $\alpha$ and thruster orientation $\beta$ of said pair of azimuth thrusters, and thruster thrust Tl and thruster thrust Tr of said pair of azimuth thrusters corresponding to said thruster orientation $\alpha$ and said thruster orientation $\beta$ so that said target thrust is obtained.

2. The ship maneuvering system according to Claim 1, wherein:

   said control device, in said translational movement mode,
   calculates a combination of said thruster orientation $\alpha$ of said azimuth thruster at a hull's port and said thruster orientation $\beta$ of said azimuth thruster at a hull's starboard, by means of:

   a traversing component Fx and forward-reverse moving component Fy of said target thrust;
   an angle $\theta$, from a straight line connecting the center of gravity of a hull with a turning center of a thruster of said azimuth thrusters, to a center line of the hull; and

   $$Fx \cos \alpha - Fx \sin (\alpha - \theta) / (\tan \beta \cos \theta + \sin \theta) = Fy \sin \alpha - Fy \sin (\alpha - \theta) / (\cos \theta + \sin \theta / \tan \beta). \quad \text{(Relation Formula 1)}$$

3. The ship maneuvering system according to any one of Claims 1 or 2, wherein said control device, in said translational movement mode,
   selects, from amongst a combination of said thruster orientation $\alpha$ of said azimuth thruster at a hull's port and said thruster orientation $\beta$ of said azimuth thruster at a hull's starboard, a combination of:
   a value of thruster orientation difference $|\alpha 2 - \alpha 1|$, which is a difference of present value $\alpha 1$ of said thruster orientation when operating said maneuvering device, and said thruster orientation $\alpha 2$ after operating said maneuvering device; and a value of thruster orientation difference $|\beta 2 - \beta 1|$, which is a difference of present value $\beta 1$ of said thruster orientation when operating said maneuvering device, and said thruster orientation $\beta 2$ after operating said maneuvering device, such that any of the larger one becomes a minimum.

4. The ship maneuvering system according to any one of Claims 1 or 2, wherein said control device, in said translational movement mode,
   selects, from amongst a combination of said thruster orientation $\alpha$ of said azimuth thruster at a hull's port and said thruster orientation $\beta$ of said azimuth thruster at a hull's starboard, a combination of:

   a value of thruster orientation difference $|\alpha 2 - \alpha 1|$, which is a difference of present value $\alpha 1$ of said thruster orientation when operating said maneuvering device and said thruster orientation $\alpha 2$ after operating the maneuvering device;
   a value of thruster orientation difference $|\beta 2 - \beta 1|$, which is a difference of present value $\beta 1$ of said thruster orientation when operating said maneuvering device, and said thruster orientation $\beta 2$ after operating said maneuvering device;
   a value of thruster thrust difference $|Tl2 - Tl1|$, which is a difference of present value Tl1 of said thruster thrust when operating said maneuvering device, and said thruster thrust Tl2 after operating said maneuvering device; and
   a value of thruster thrust difference $|Tr2 - Tr1|$, which is a difference of present value Tr1 of said thruster thrust when operating said maneuvering device and said thruster thrust Tr2 after operating said maneuvering device,

such that a maximum value becomes a minimum.

5. The ship maneuvering system according to any one of Claims 1 or 2, wherein said control device, in said translational movement mode, selects, from amongst a combination of said thruster orientation α of said azimuth thruster at a hull's port and said thruster orientation β of said azimuth thruster at a hull's starboard, a combination of:

   an estimated attainment time required for changing from said thruster orientation α1 when operating said maneuvering device to said thruster orientation α2 after operating said maneuvering device;
   an estimated attainment time required for changing from said thruster orientation β1 when operating said maneuvering device to said thruster orientation β2 after operating said maneuvering device;
   an estimated attainment time required for changing from said thruster thrust Tl1 when operating said maneuvering device to said thruster thrust Tl2 after operating said maneuvering device; and
   an estimated attainment time required for changing from said thruster thrust Tr1 when operating said maneuvering device to said thruster thrust Tr2 after operating said maneuvering device,
   such that a maximum value becomes a minimum.

6. The ship maneuvering system according to any one of Claims 1 or 2, wherein said control device, in said translational movement mode, selects, from amongst a combination of said thruster orientation α of said azimuth thruster at a hull's port and said thruster orientation β of said azimuth thruster at a hull's starboard, a combination of: a value of thruster orientation difference |α2 - α1|, which is a difference of present value α1 of said thruster orientation when operating said maneuvering device, and said thruster orientation α2 after operating said maneuvering device; and a value of thruster orientation difference |β2 - β1|, which is a difference of present value β1 of said thruster orientation when operating said maneuvering device, and said thruster orientation β2 after operating said maneuvering device, in a selectable range when considering other elements, excluding the time that said azimuth thrusters require for turning, such that any of the larger one becomes a minimum.

7. The ship maneuvering system according to any one of Claims 1 or 2, wherein said control device, in said translational movement mode,

   calculates thruster orientation α0 and thruster thrust Tl0 of said azimuth thruster at a hull's port, and thruster orientation β0 and thruster thrust Tr0 of said azimuth thruster at a hull's starboard, as left-right symmetrical reference values of thruster orientations and thruster thrusts of said pair of azimuth thrusters, by increasing/decreasing a forward-reverse moving component of said thruster orientations and said thruster thrusts according to an increase/decrease of said second maneuvering quantity, by means of control similar to that of the case in which a hull conducts forward movement or reverse movement,
   selects, in said translational movement mode, from amongst a combination of said thruster orientation α of said azimuth thruster at a hull's port and said thruster orientation β of said azimuth thruster at a hull's starboard, a combination of:

      a value of thruster orientation difference |α2 - α0|, which is a difference of said thruster orientation α0 and said thruster orientation α2 after operating said maneuvering device; a value of thruster orientation difference |β2 - β0|, which is a difference of said thruster orientation β0 and said thruster orientation β2 after operating said maneuvering device; a value of thruster thrust difference |Tl2 - Tl0|, which is a difference of said thruster thrust Tl0 and said thruster thrust Tl2 after operating said maneuvering device; and a value of thruster thrust difference |Tr2 - Tr0|, which is a difference of said thruster thrust Tr0 and said thruster thrust Tr2 after operating said maneuvering device,
      such that a maximum value becomes a minimum.

8. The ship maneuvering system according to any one of Claims 1 or 2, wherein said control device, in said translational movement mode,

   rectifies the size of said target thrust according to a value of said first maneuvering quantity, and
   calculates and selects a combination of thruster orientation α and thruster orientation β of said pair of azimuth thrusters, and thruster thrust Tl and thruster thrust Tr of said pair of azimuth thrusters corresponding to said thruster orientation α and said thruster orientation β, such that said rectified target thrust is obtained.

**9.** The ship maneuvering system according to any one of Claims 1 or 2, wherein said control device, in said translational movement mode,

selects another combination of which the total of said thruster thrust Tl and said thruster thrust Tr becomes smaller from amongst combinations of said thruster orientation $\alpha$, said thruster orientation $\beta$, said thruster thrust Tl, and said thruster thrust Tr producing said target thrust,
if a state in which the same said first maneuvering quantity and said second maneuvering quantity which were outputted from said maneuvering device exceeded a prescribed period of time, and
changes to said another combination from the present combination.

**10.** The ship maneuvering system according to any one of Claims 1 or 2, wherein

said maneuvering device is able to output a third maneuvering quantity instructing a swing of a hull or a change in hull orientation, and
said control device, in said translational movement mode,
changes at least one of said thruster orientations and said thruster thrusts of said pair of azimuth thrusters, by means of said third maneuvering quantity outputted from said maneuvering device.

**11.** The ship maneuvering system according to Claim 10, wherein

said control device, in said translational movement mode,
calculates a combination of said thruster orientation $\alpha$ of said azimuth thruster at a hull's port and said thruster orientation $\beta$ of said azimuth thruster at a hull's starboard, by means of:

traversing component Fx and forward-reverse moving component Fy of said target thrust;
an angle $\theta$, from a straight line connecting the center of gravity of a hull with a turning center of a thruster of said azimuth thrusters, to a center line of the hull;
a target swing component M of a hull determined according to said third maneuvering quantity outputted from said maneuvering device; and

$$\{-Fy (\tan\beta \cos\theta + \sin\theta) + M\} / \{\sin(\alpha - \theta) - \cos\alpha (\tan\beta \cos\theta + \sin\theta)\} = \{Fx (\cos\theta + \sin\theta / \tan\beta) + M\} / \{\sin(\alpha - \theta) - \sin\alpha (\cos\theta + \sin\theta / \tan\beta)\}. \quad \text{(Relation Formula 2)}$$

**12.** The ship maneuvering system according to Claim 10, wherein

said control device, in said translational movement mode,
calculates a combination of said thruster orientation $\alpha$ of said azimuth thruster at a hull's port and said thruster orientation $\beta$ of said azimuth thruster at a hull's starboard, by means of:

traversing component Fx' and forward-reverse moving component Fy' of a target thrust of which a target thrust of a hull was reduced, and which was determined according to said first maneuvering quantity and said second maneuvering quantity;
an angle $\theta$, from a straight line connecting the center of gravity of a hull with a turning center of a thruster of said azimuth thrusters, to a center line of the hull;
a target swing component M of a hull determined according to said third maneuvering quantity outputted from said maneuvering device; and

$$\{-Fy (\tan\beta \cos\theta + \sin\theta) + M\} / \{\sin(\alpha - \theta) - \cos\alpha (\tan\beta \cos\theta + \sin\theta)\} = \{-Fx (\cos\theta + \sin\theta / \tan\beta) + M\} / \{\sin(\alpha - \theta) - \sin\alpha (\cos\theta + \sin\theta / \tan\beta)\}. \quad \text{(Relation Formula 2)}$$

**13.** The ship maneuvering system according to Claim 10, wherein

said control device, in said translational movement mode,

changes said thruster orientations of said pair of azimuth thrusters to an angle of which a swing component becomes larger, and
changes said thruster thrusts of said pair of azimuth thrusters according to the size of a target swing component.

**14.** The ship maneuvering system according to Claim 10, comprising a measuring device measuring a hull orientation, wherein

said control device, in said translational movement mode,
determines said target swing component such that a difference between a hull orientation measured with said measuring device and a target hull orientation is made to be zero.

**15.** The ship maneuvering system according to Claim 14, wherein

said control device, in said translational movement mode,
calculates a difference between a hull orientation measured with said measuring device and target hull orientation, and
configures said target swing component as a value obtained by adding a value obtained by multiplying said difference with a coefficient, to a value obtained by time differentiating said difference and multiplying this with a coefficient.

**16.** The ship maneuvering system according to Claim 14, wherein

said control device, in said translational movement mode,
calculates the difference between a hull orientation measured with said measuring device and target hull orientation, and
configures said target swing component as a value obtained by multiplying, a value obtained by subtracting a swing angular velocity from a value obtained by multiplying said difference with a coefficient, with a coefficient.

**17.** The ship maneuvering system according to Claim 14, wherein

said control device, in said translational movement mode,
determines a target swing component of a hull according to said third maneuvering quantity when said third maneuvering quantity was outputted, and
performs the control according to Claim 14 if said third maneuvering quantity is not outputted.

**18.** The ship maneuvering system according to Claim 14, wherein

said control device, in said translational movement mode,
configures a hull orientation in at least one point in time, of a point of switching to said translational movement mode, or a point in time at which a third maneuvering quantity becomes zero, as a target hull orientation.

**19.** The ship maneuvering system according to any one of Claims 1 or 2, wherein

said maneuvering device comprises a cruising mode for controlling said azimuth thrusters so that a hull performs a forward movement or reverse movement, wherein in said cruising mode,
forward-reverse movement, straight advancing turning, reverse turning movement, and neutral stop of a hull takes place by
configuring a reference value of thruster orientations of said pair of azimuth thrusters left-right symmetrical,
increasing/decreasing a forward-reverse moving component of said thruster orientations and said thruster thrusts of said pair of azimuth thrusters according to an increase/decrease of said second maneuvering quantity, and
further increasing/decreasing said thruster orientations set up according to said second maneuvering quantity, according to an increase/decrease of said first maneuvering quantity.

**20.** The ship maneuvering system according to Claim 19, wherein said maneuvering device is able to output a third maneuvering quantity instructing a swing of a hull or a change in hull orientation, and

said control device, in said cruising mode,
increases/decreases said thruster orientation set up according to said second maneuvering quantity, according to an increase/decrease of said third maneuvering quantity instead of said first maneuvering quantity, or further increases/decreases, according to a third maneuvering quantity, said thruster orientation set up according to said second maneuvering quantity, after having increased/decreased said thruster orientation according to said first maneuvering quantity.

**21.** The ship maneuvering system according to any one of Claims 1 or 2, wherein at least one maneuvering quantity of said first maneuvering quantity and said second maneuvering quantity is remotely provided to said control device.

**22.** A ship maneuvering system according to Claim 21, comprising a receiver of a remote maneuvering device at said hull, and
comprising a transmitter of said remote maneuvering device at a main boat which is made to move by said hull.

FIG. 1

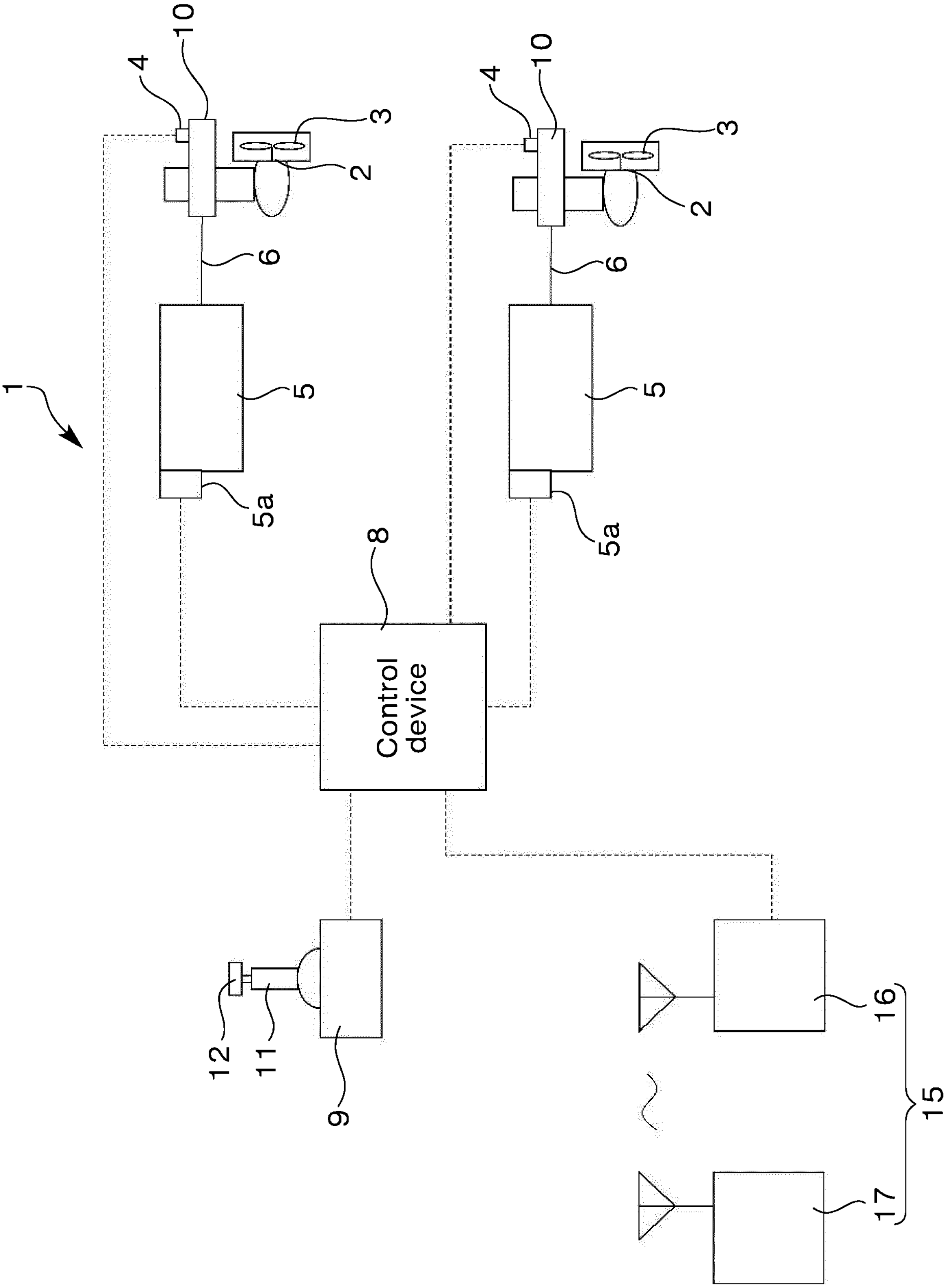

FIG. 2A

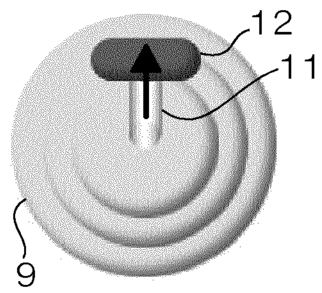


FIG. 2B

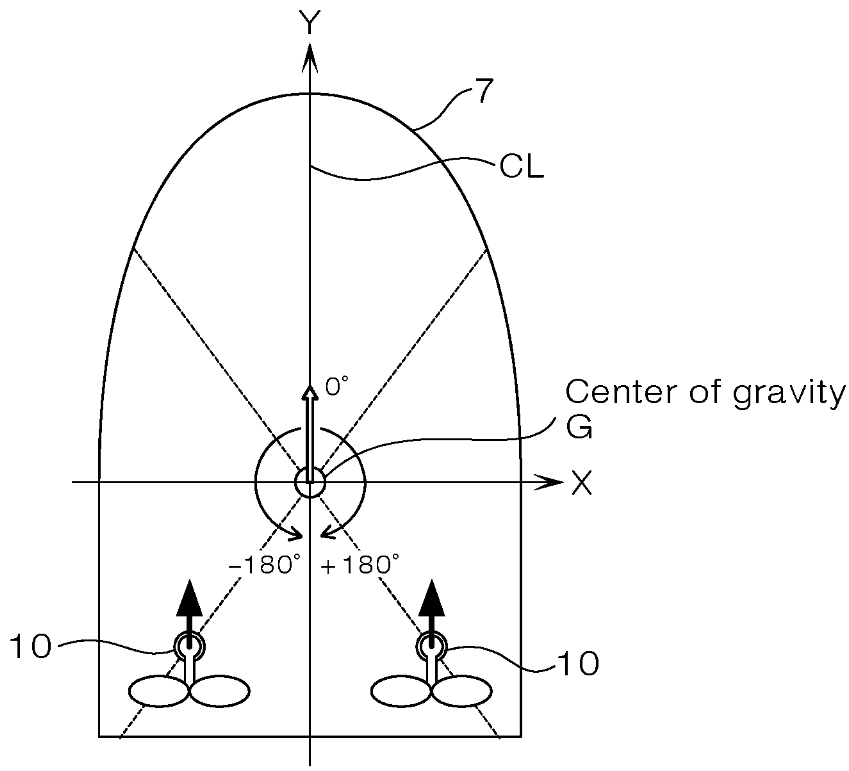

FIG. 2C

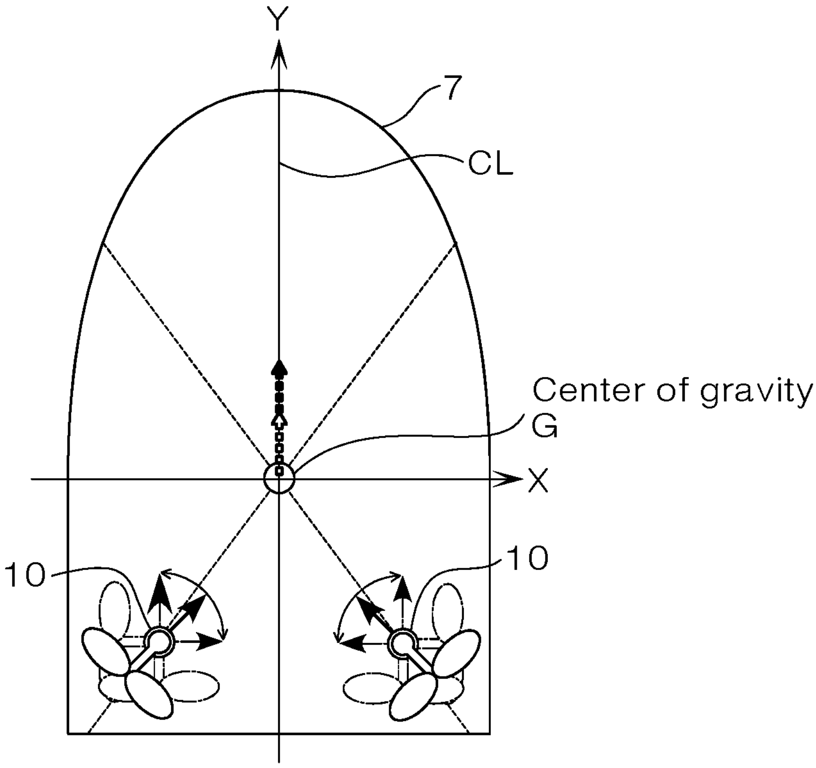


FIG. 3A

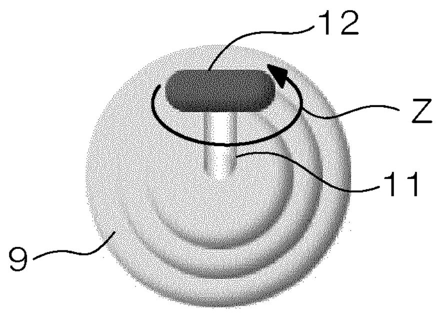

FIG. 3B

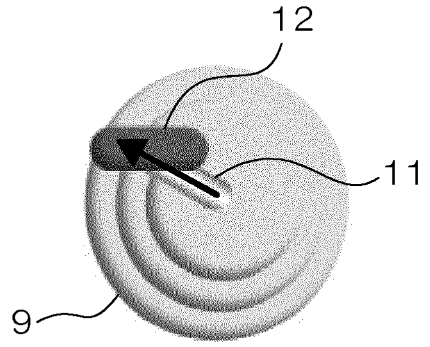


FIG. 3C

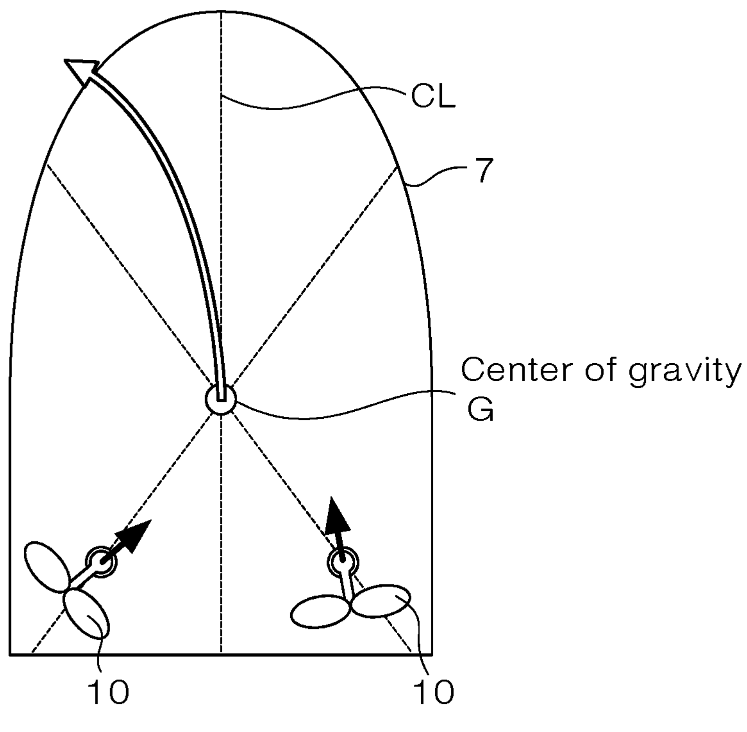

FIG. 4A

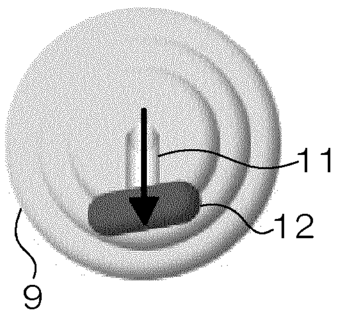


FIG. 4B

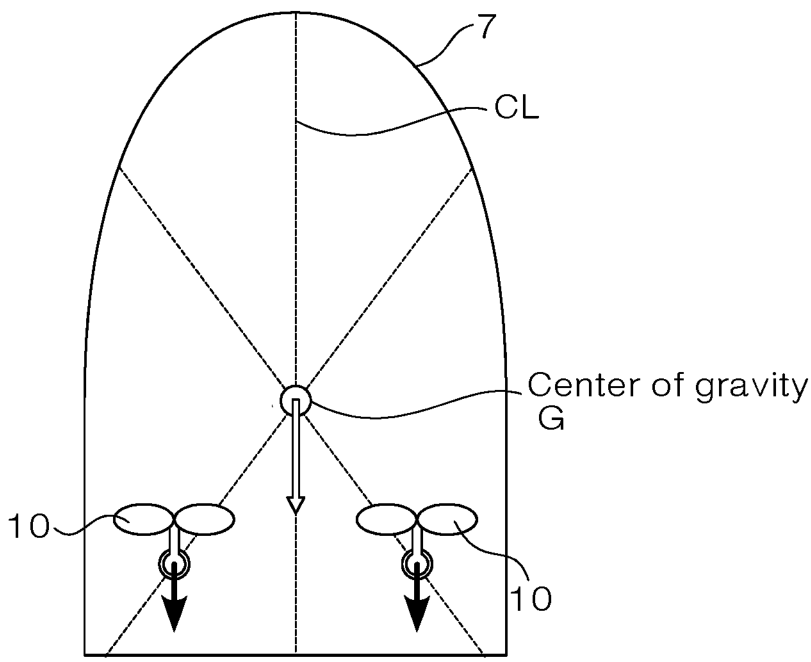

# FIG. 4C

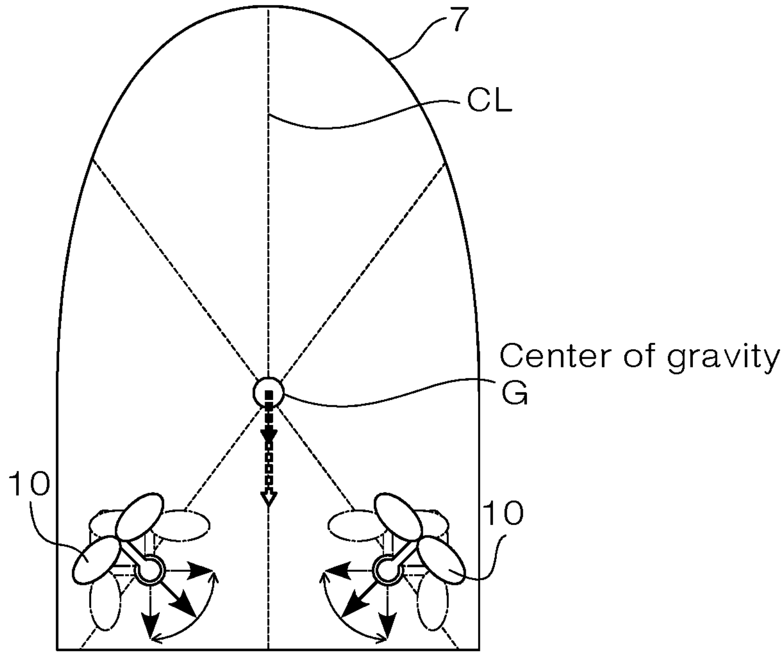


# FIG. 5A

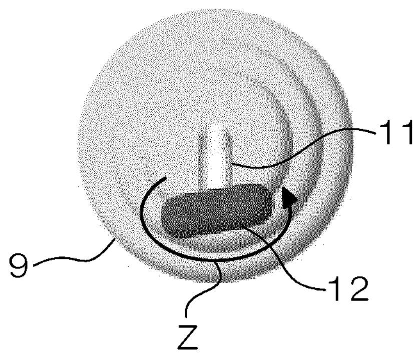

FIG. 5B

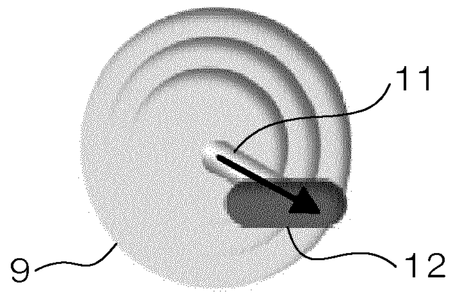


FIG. 5C

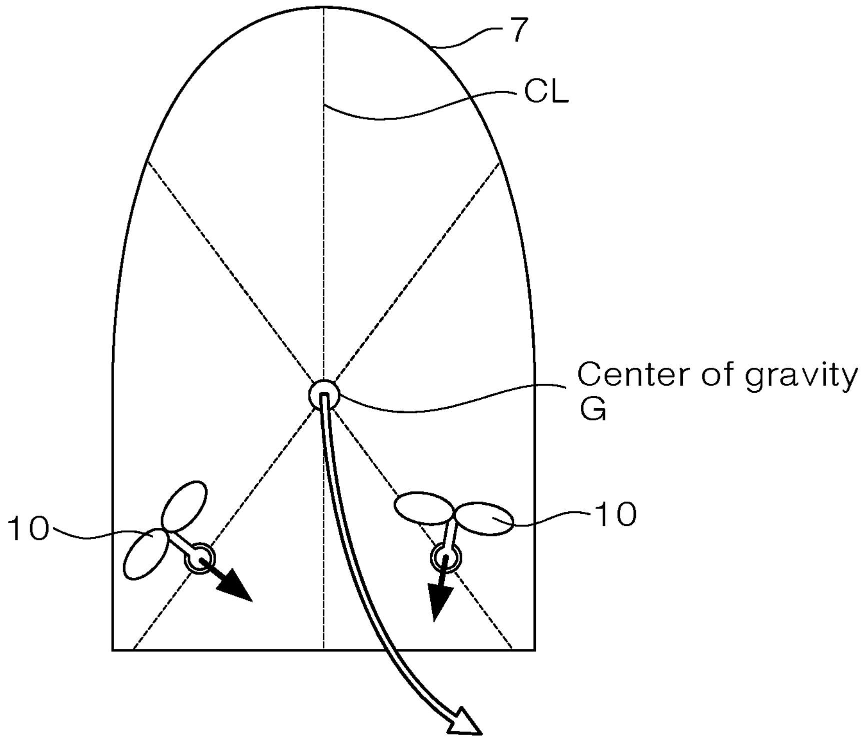

FIG. 6A

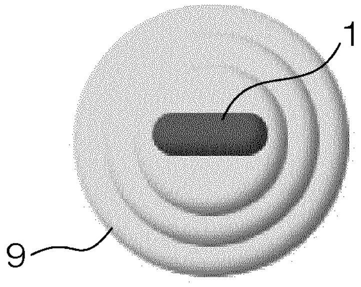


FIG. 6B

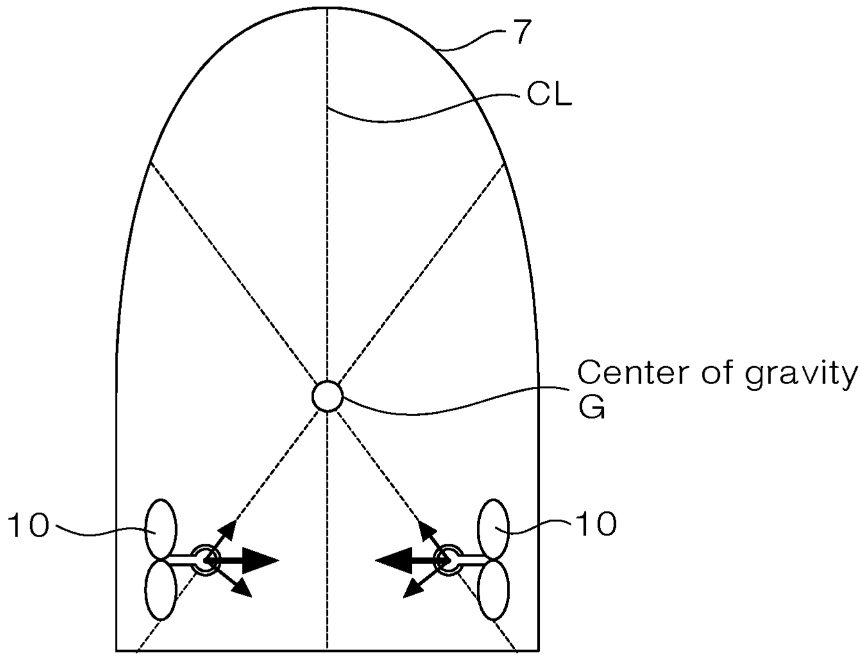

FIG. 7A

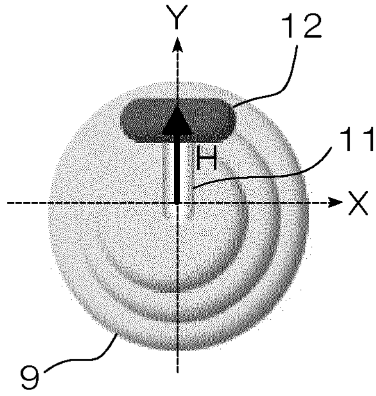


FIG. 7B

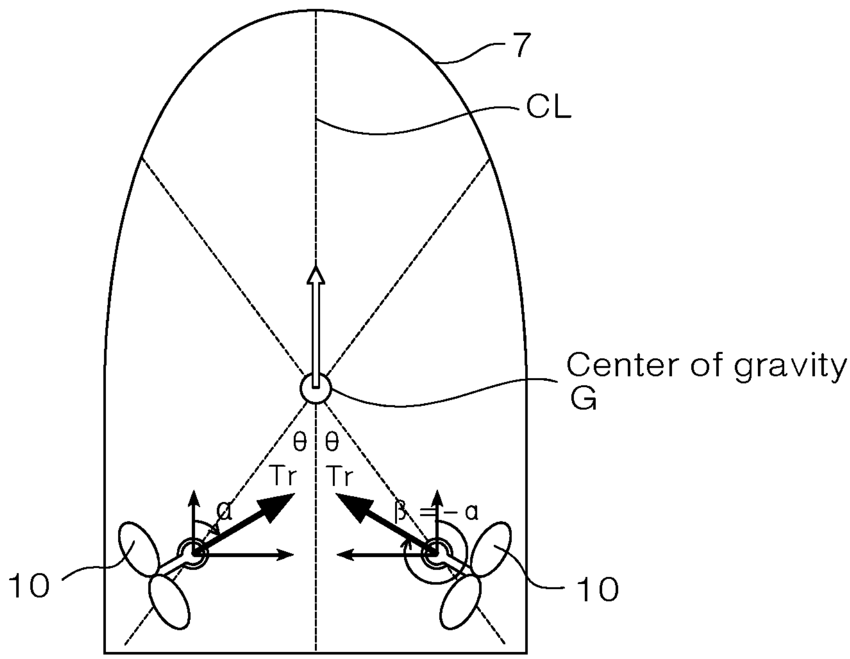

FIG. 7C

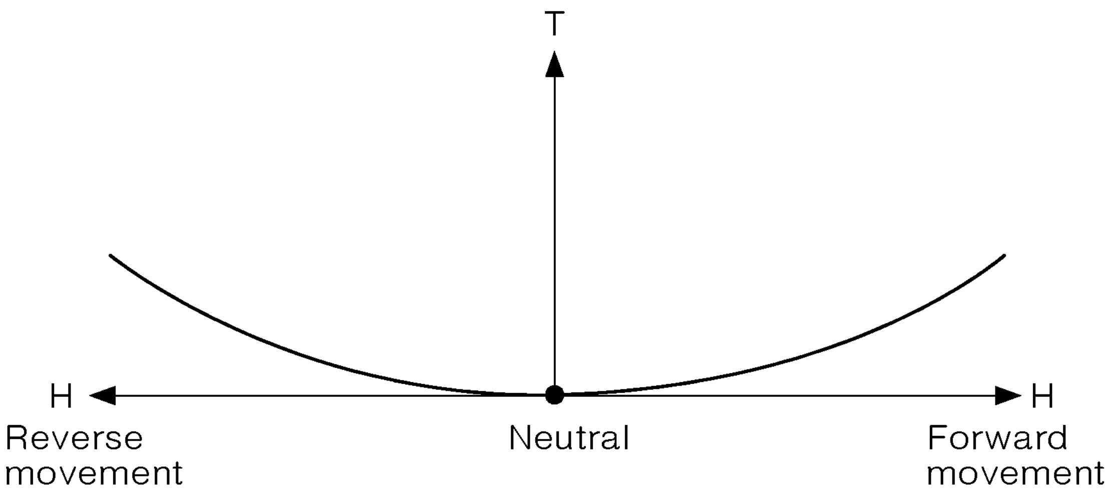

FIG. 8

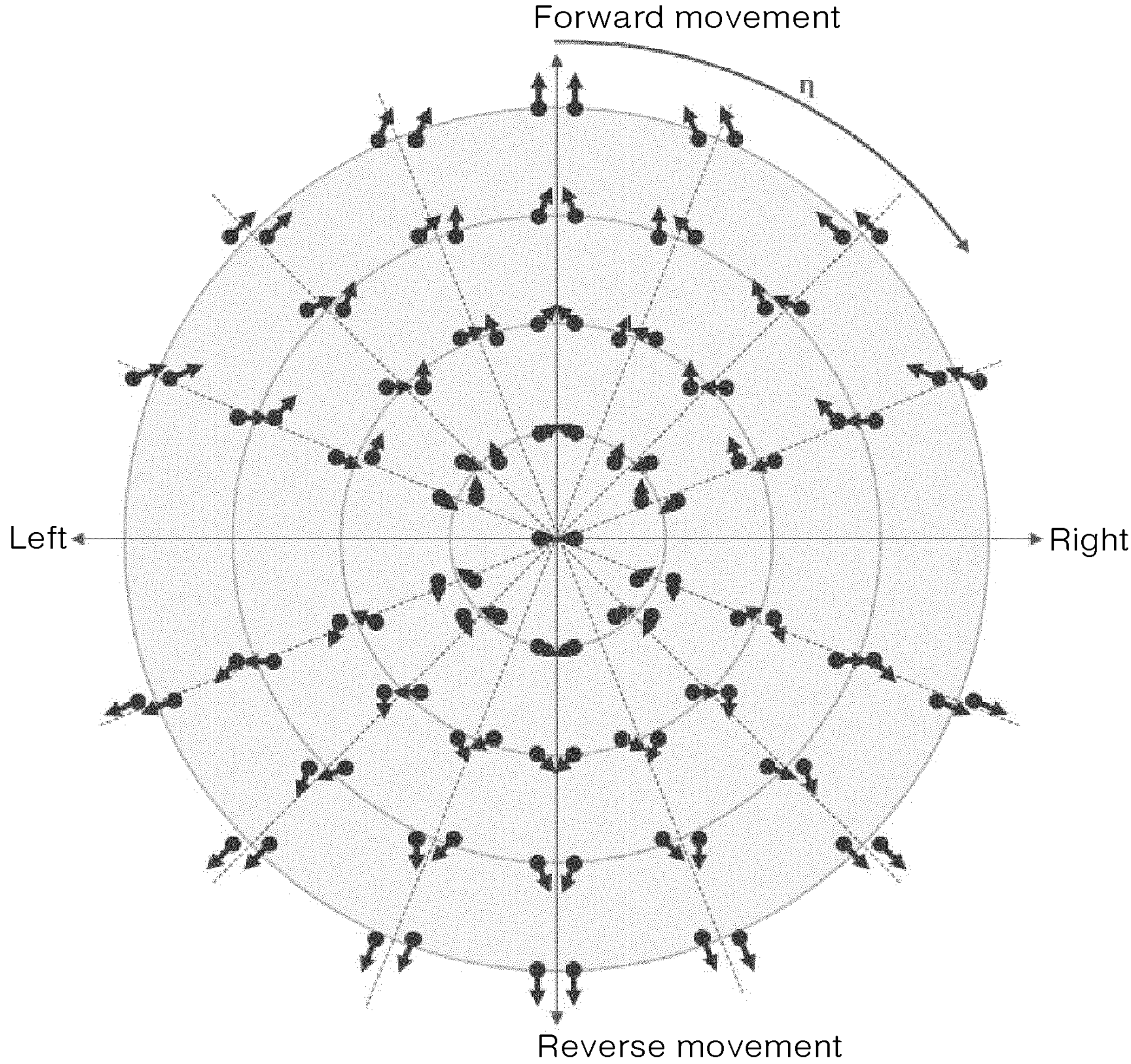

FIG. 9

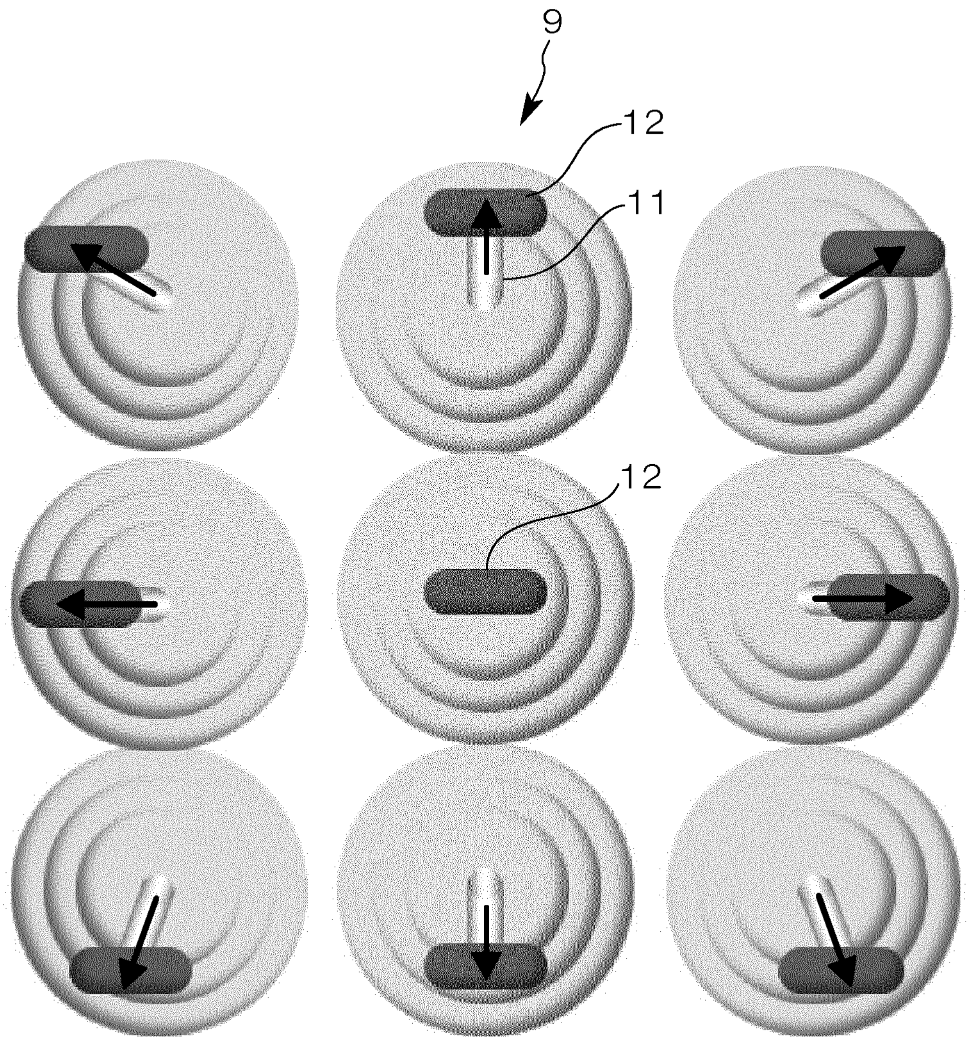

FIG. 10A

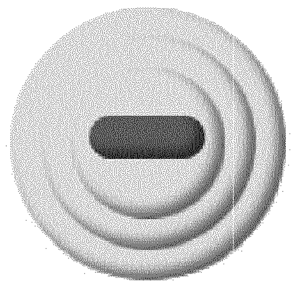

FIG. 10B

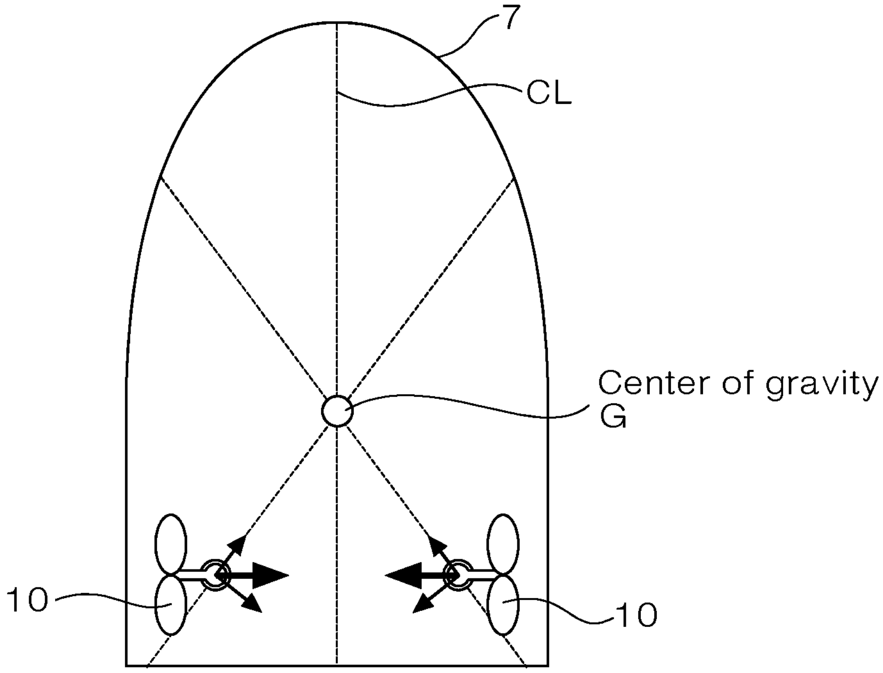

FIG. 11A

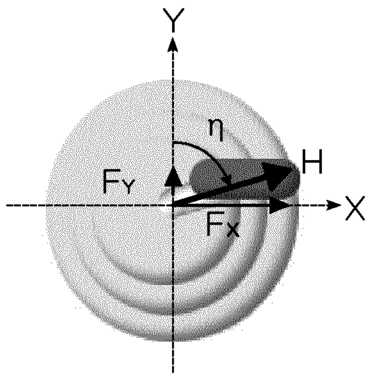


FIG. 11B

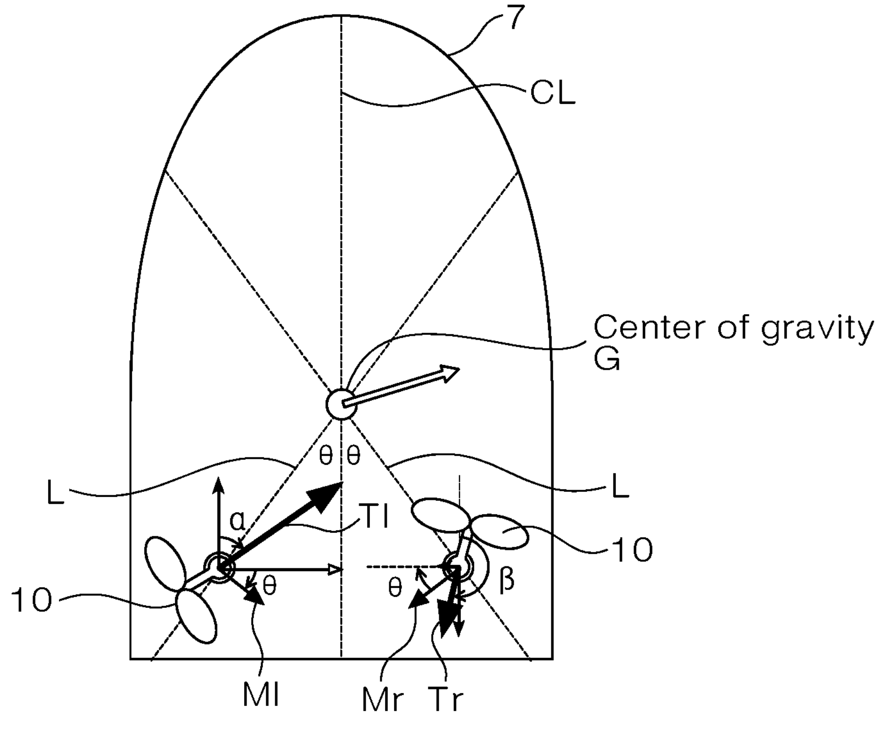

# FIG. 12

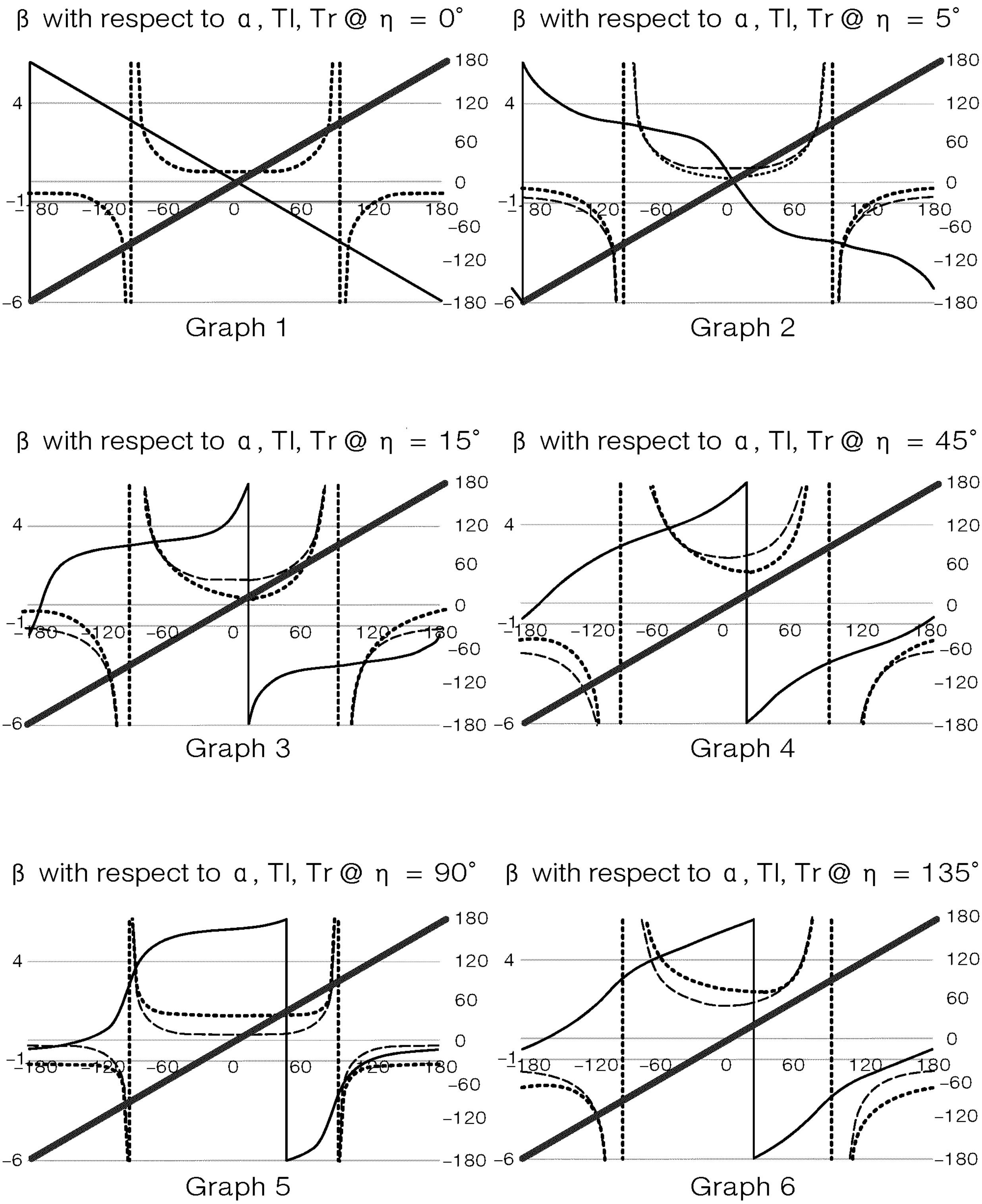


( ▬ : α, ― : β, - - - : Tl, ┅┅ : Tr, horiz. axis: α, left vert. axis: Tl or Tr, right vert. axis: α or β )

# FIG. 13

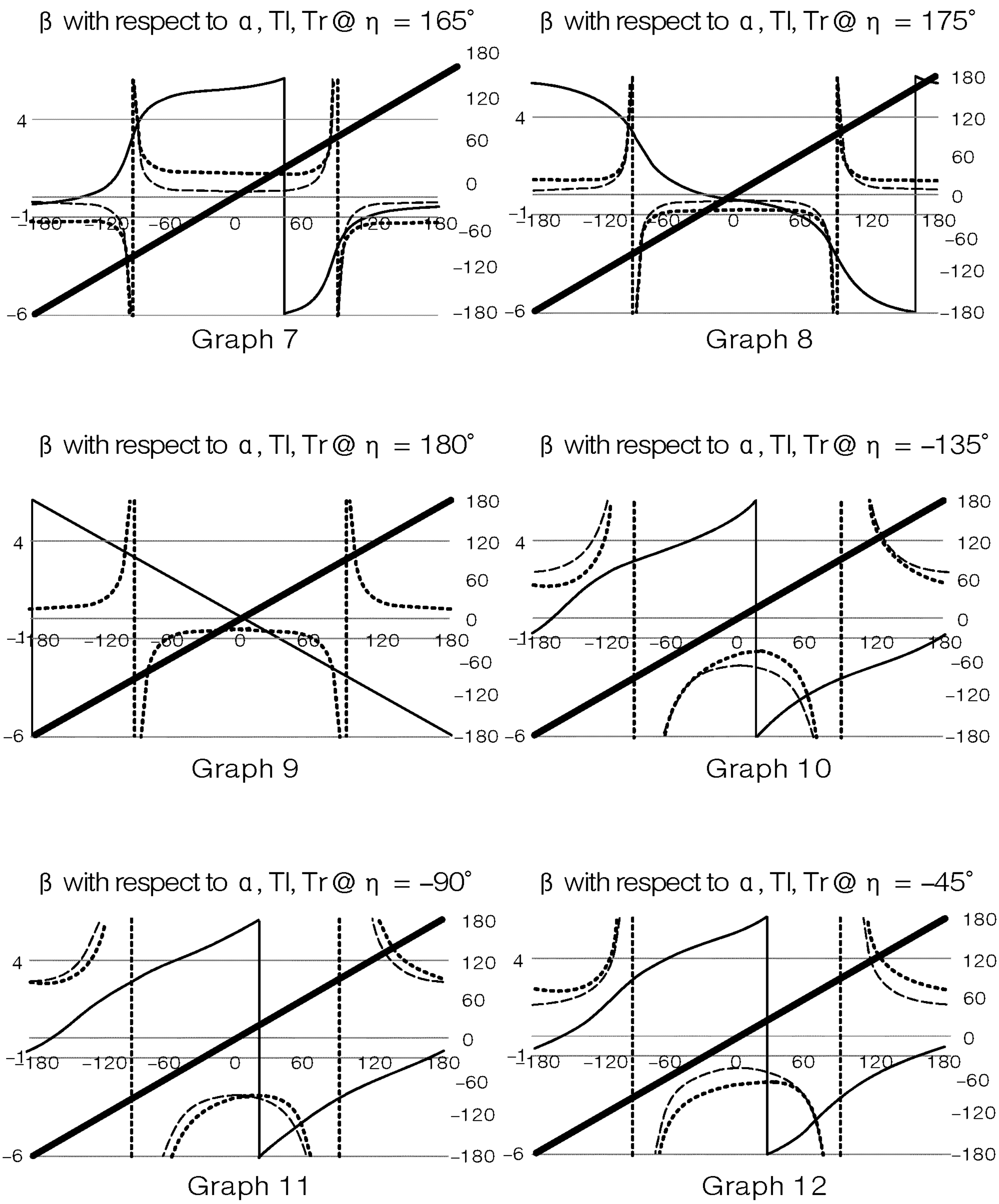


(▬ : α、— : β、--- : Tl、----- : Tr、horiz. axis: α、left vert. axis: Tl or Tr、right vert. axis: α or β )

# FIG. 14A

β with respect to α, Tl, Tr @ η = 5°

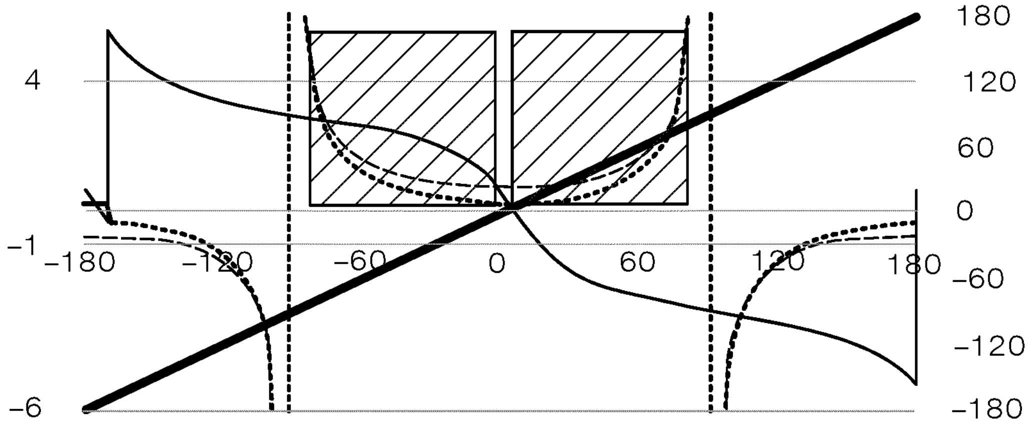


# FIG. 14B

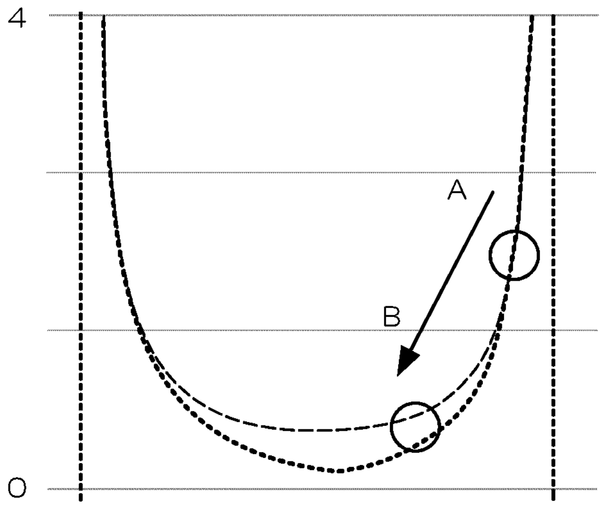

FIG. 15

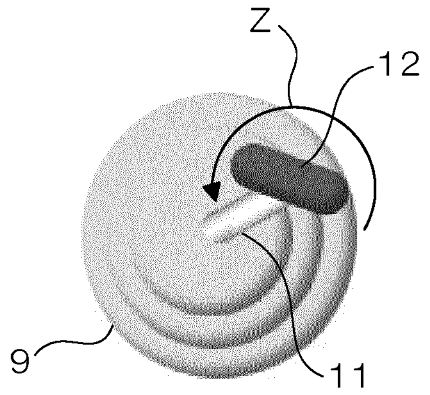


FIG. 16A

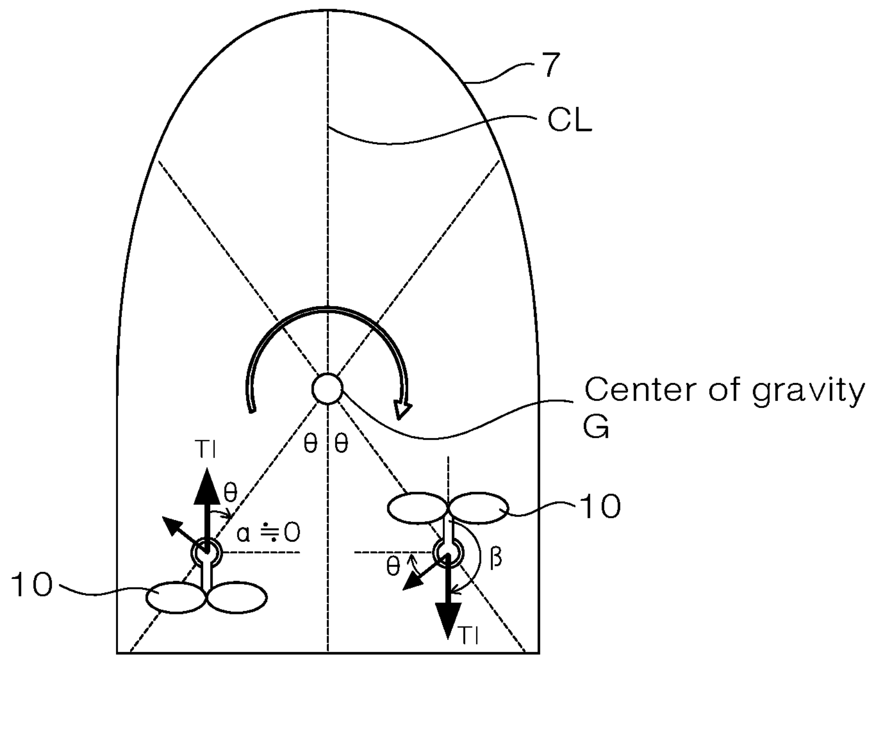

FIG. 16B

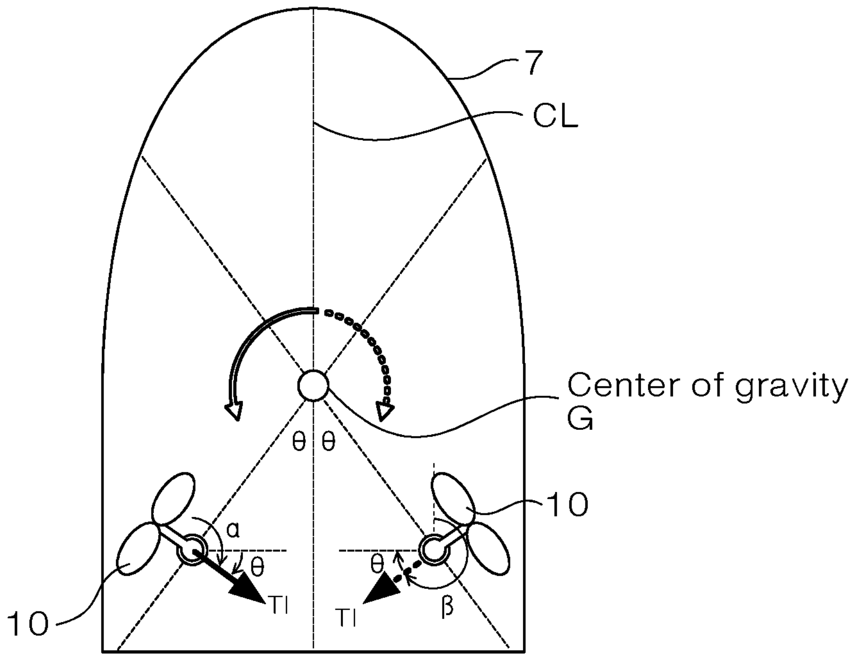

# FIG. 17

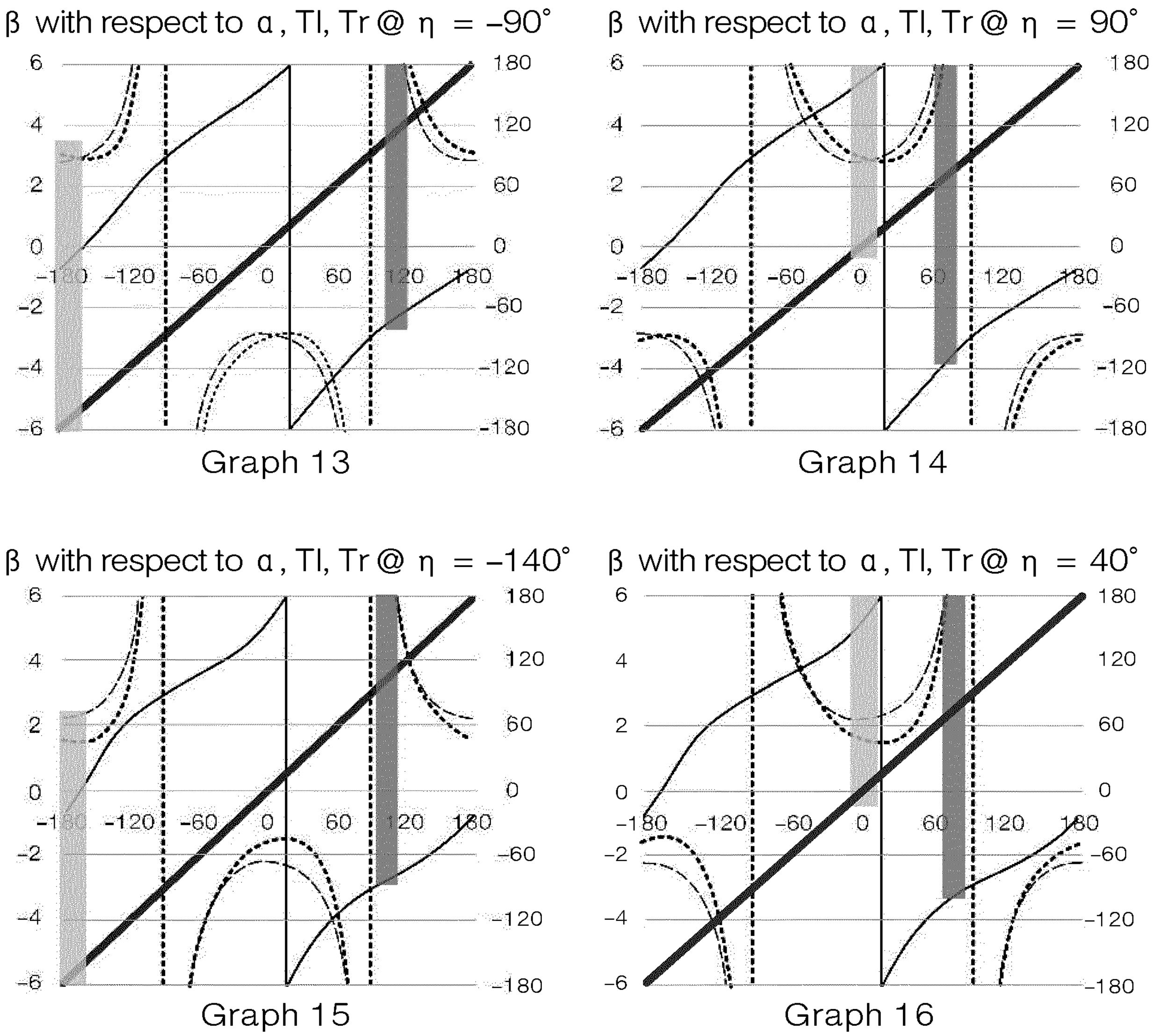


(▬ : α、—: β、---: Tl、┅: Tr、horiz. axis: α、left vert. axis: Tl or Tr、right vert. axis: α or β )

FIG. 18A

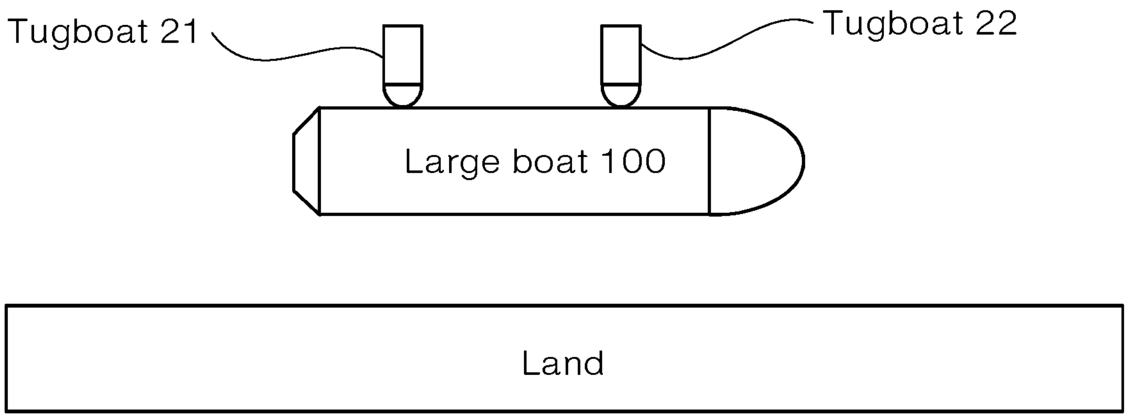


FIG. 18B

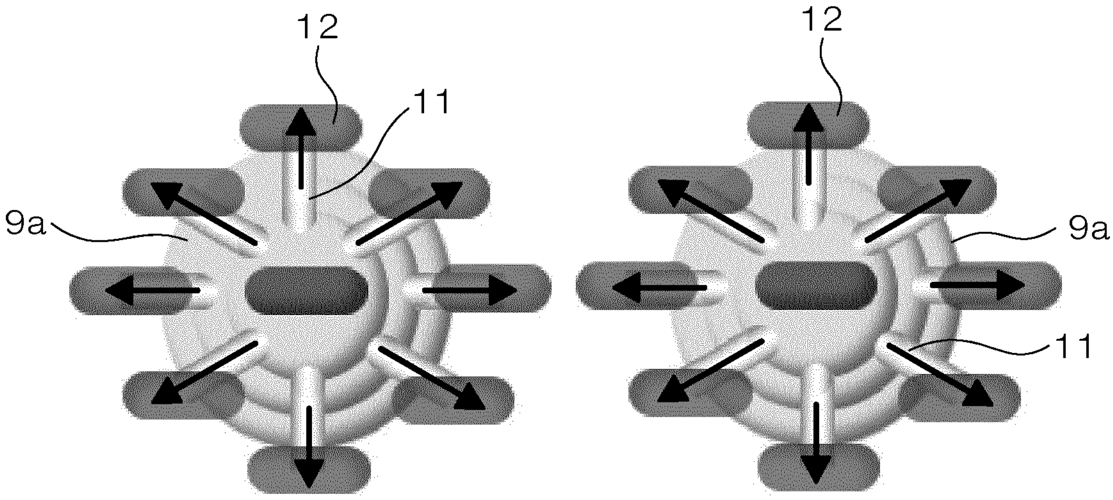

FIG. 18C

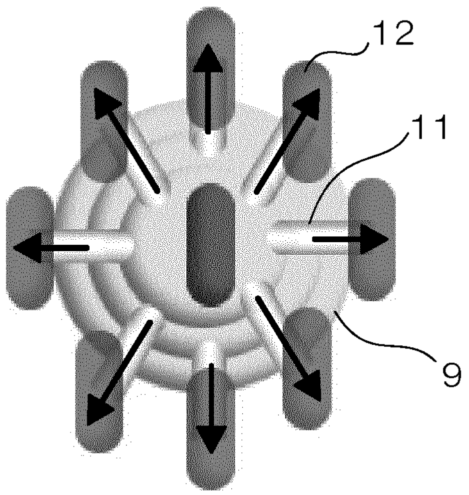

## INTERNATIONAL SEARCH REPORT

International application No.
**PCT/JP2022/035152**

**A. CLASSIFICATION OF SUBJECT MATTER**

***B63H 25/42***(2006.01)i
FI: B63H25/42 J; B63H25/42 K; B63H25/42 E

According to International Patent Classification (IPC) or to both national classification and IPC

**B. FIELDS SEARCHED**

Minimum documentation searched (classification system followed by classification symbols)

B63H25/42

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-74247 A (YAMAHA MOTOR CO., LTD.) 12 May 2016 (2016-05-12) paragraphs [0024]-[0099], fig. 1-16 | 1, 8, 10, 13-14, 18, 21, 22 |
| A | paragraphs [0024]-[0099], fig. 1-16 | 2-7, 9, 11-12, 15-17, 19-20 |
| Y | US 2011/0239923 A1 (ELMBO, Niels Peter) 06 October 2011 (2011-10-06) paragraphs [0026]-[0069], fig. 1-10 | 1, 8, 10, 13-14, 18, 21, 22 |
| A | paragraphs [0026]-[0069], fig. 1-10 | 2-7, 9, 11-12, 15-17, 19-20 |
| A | US 8924054 B1 (BRUNSWICK CORP.) 30 December 2014 (2014-12-30) | 1–22 |
| A | JP 2012-17058 A (MAROL CO., LTD.) 26 January 2012 (2012-01-26) | 1–22 |
| A | JP 2019-516623 A (VOLVO CAR CORP.) 20 June 2019 (2019-06-20) | 1–22 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 November 2022** | **22 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/035152**

| Patent document cited in search report | Publication date (day/month/year) | Patent family member(s) | Publication date (day/month/year) |
|---|---|---|---|
| JP 2016-74247 A | 12 May 2016 | US 2016/0096610 A1<br>paragraphs [0041]-[0115], fig. 1-16 | |
| US 2011/0239923 A1 | 06 October 2011 | US 2013/0087088 A1<br>paragraphs [0042]-[0102], fig. 1-9 | |
| US 8924054 B1 | 30 December 2014 | (Family: none) | |
| JP 2012-17058 A | 26 January 2012 | (Family: none) | |
| JP 2019-516623 A | 20 June 2019 | WO 2017/202458 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014034269 A
- JP 2018086988 A
- JP H0249200 Y